(19) Europäisches Patentamt
European Patent Office
Office européen des brevets

(11) **EP 1 142 247 B1**

(12) **EUROPÄISCHE PATENTSCHRIFT**

(45) Veröffentlichungstag und Bekanntmachung des Hinweises auf die Patenterteilung:
**11.09.2002   Patentblatt 2002/37**

(21) Anmeldenummer: **99960704.7**

(22) Anmeldetag: **21.12.1999**

(51) Int Cl.⁷: **H04L 27/26**

(86) Internationale Anmeldenummer:
**PCT/AT99/00310**

(87) Internationale Veröffentlichungsnummer:
**WO 00/038386 (29.06.2000 Gazette 2000/26)**

(54) **VERFAHREN ZUR UNTERDRÜCKUNG VON SCHMALEN FREQUENZBÄNDERN**

METHOD FOR SUPPRESSING NARROW FREQUENCY BANDS

PROCEDE POUR ANNULER DES BANDES DE FREQUENCES ETROITES

(84) Benannte Vertragsstaaten:
**AT DE FR GB IT SE**

(30) Priorität: **21.12.1998   AT   212798**

(43) Veröffentlichungstag der Anmeldung:
**10.10.2001   Patentblatt 2001/41**

(73) Patentinhaber: **TELEFONAKTIEBOLAGET L M ERICSSON**
**126 25 Stockholm (SE)**

(72) Erfinder: **BALDEMAIR, Robert**
**A-1210 Wien (AT)**

(74) Vertreter: **Gibler, Ferdinand, Dipl.-Ing. Dr. techn. Patentanwalt**
**Dorotheergasse 7**
**1010 Wien (AT)**

(56) Entgegenhaltungen:
**WO-A-97/40609**

**Beschreibung**

Die Erfindung betrifft ein Verfahren zur Unterdrückung von schmalen Frequenzbändern in Ausblendbereichen bei der Übertragung von Daten durch ein Mehrträgerverfahren, z.B. DMT (Discrete Multitone), bei dem ein vorbestimmtes breites Frequenzband in eine Vielzahl von Subkanälen mit diesen zugeordneten Subträgern unterteilt ist und die zu übertragenden Daten im Sender in Blöcke unterteilt, durch Inverse-Diskrete-Fourier-Transformation (IDFT) moduliert und im Empfänger durch Diskrete-Fourier-Transformation (DFT) demoduliert werden, wodurch jeder Subkanal im Spektrum eine Hauptkeule und mehrere, im Bereich naher Subträger auftretende Nebenkeulen aufweist, wobei zumindest ein Teil der in zumindest einem Ausblendbereich beinhalteten Subträger bzw. an diesen Ausblendbereich angrenzenden Subträger als Kompensationstöne verwendet werden, die ein ähnliches Frequenzspektrum wie die in dem Ausblendbereich auftretenden Nebenkeulen von außerhalb des Ausblendbereiches vorhandenen Subträgern aufweisen und entsprechend den Datenwerten dieser Nebenkeulen ausgesteuert werden, um diese zu unterdrücken.

Bei einer Vielzahl von bekannten Datenübertragungssystemen findet eine Übertragung im Frequenzmultiplex statt. Die dabei verwendeten Verfahren sind als Mehrträgerverfahren, Orthogonal Frequency Division Multiplex (OFDM) und Discrete Multitone (DMT) bekanntgeworden. Ein vorgegebenes, breites Frequenzband wird dabei in sehr viele, sehr schmale Frequenzbänder bzw. Subkanäle unterteilt, über welche Daten mit verschiedenen Modulationsverfahren und Bitraten übertragen werden können. Zur Verteilung der Daten im Sender kann die Inverse-Fast-Fourier-Transformation (IFFT) und zur Rekonstruktion im Empfänger entsprechend die Fast-Fourier-Transformation (FFT) verwendet werden. Problematisch ist hierbei die starke Überlappung der Subkanäle im Frequenzbereich, da jeder aus Haupt- und Nebenkeulen zusammengesetzte Subkanal von den Nebenkeulen mehrerer, benachbarter Subkanäle überlagert wird. Die IFF-Transformation bewirkt jeweils eine Filterung der Subkanäle mit frequenzverschobenen Versionen eines einzigen Prototypfilters. Die geringe Dämpfung der Nachbarsubkanäle verursacht die erwähnte Überlappung durch die Nebenkeulen.

Eine übliche Frequenzmultiplex-Übertragung wie sie mittels DMT-Verfahren realisierbar ist, kann dabei ein sehr breites Frequenzband, z.B. von 300 kHz bis 30 MHz überstreichen, das mit gleich beabstandeten Trägerfrequenzen aufgefüllt ist.

Entsprechend der national jeweils unterschiedlichen Frequenzbereichsnormen treten praktisch in jedem breiten Sendespektrum verbotene Bereiche auf, die für besondere Anwendungen reserviert sind. Diese können durch Amateurfunk-Bereiche, Notruf-Sendebereiche oder andere bekannte Sendebereiche belegt sein. Dadurch ist es unumgänglich, bestimmte Frequenzbereiche freizuhalten, um den Sendebetrieb dieser festgelegten Bereiche nicht zu stören.

Wie vorstehend bereits erwähnt, weist jeder Subkanal neben einer zentralen Hauptkeule symmetrisch um die Trägerfrequenz abfallende Nebenkeulen auf.

Um nun eine ausreichende Unterdrückung eines bestimmten Frequenzbereiches zu erreichen, ist es nicht ausreichend, die in diesem Bereich vorhandenen Subkanäle ohne Modulation zu betreiben, welcher Vorgang auch als Null-Laden der Subträger bezeichnet wird, da aufgrund der geringen Nebenkeulendämpfung ein so starkes Nebensprechen in den benachbarten Kanälen auftritt, daß die von diesen ausgehende Störung immer noch zu groß ist, um den gewünschten Ausblendbereich freizuhalten. Die Leistungsdichte in diesem Ausblendbereich besitzt aufgrund der Nebenkeulen dann immer noch einen nicht zu vernachlässigenden Wert

Bei bisher bekannten Systemen mußten daher relativ viele zu dem freizuhaltenden Bereich benachbart liegende Kanäle unausgesteuert gehalten werden, um so eine ausreichende Absenkung der Nebenkeulen im Ausblendbereich zu erreichen. Nachteilig ist dabei aber der hohe Grad an nicht ausgenutzten Subkanälen, die dafür erforderlich sind, wodurch sich eine relativ schlechte Ausnutzung des gesamten Frequenzbereiches des angewandten Sende-Verfahrens ergibt.

Aus der WO 97/40609 A ist ein Mehrträger-Übertragungsverfahren für xDSL-Anwendungen bekanntgeworden, bei dem zur Unterdrückung eines schmalen Frequenzbandes zusätzlich ein oder mehrere Kompensationstöne am Rande des zu unterdrückenden Frequenzbandes übertragen werden, deren Phase und Amplitude so gewählt ist, daß sie die durch Nebenkeulen von außerhalb des schmalen Frequenzbandes gelegenen Trägern hervorgerufene Sendeleistung innerhalb dieses Frequenzbandes unterdrücken.

Auf diese Weise ist eine Erhöhung der Anzahl der nutzbaren Subkanäle erreichbar.

Es kann gezeigt werden, daß die Beträge der Nebenkeulen jedes Subkanals sich im wesentlichen nur in der Amplitude und in einem konstanten Phasen-Offset unterscheiden. Die Störungen, die ein beliebiger Subkanal in dem Ausblendebereich hervorruft, besitzt daher ein zu allen anderen Störungen ähnliches Spektrum, sodaß die resultierende Gesamtstörung ebenfalls dem einer Nebenkeule ähnelt.

Aus den Datenwerten einer Anzahl von Subkanälen kann die Amplitude und Phase der Nebenkeulenspektren für den Ausblendbereich berechnet und der zu jedem Frequenzzwischenbereich gehörige Kompensationsimpuls durch Addition der einzelnen, dafür berechneten komplexen Nebenkeulenspektren ermittelt werden. Vor der Übertragung werden der oder die so ermittelten Kompensationsimpulse dem Sendesignal so überlagert, daß der Ausblendbereich von störenden Nebenkeulen befreit wird.

Durch Subtraktion eines Kompensationsimpulses mit gleichem Betragsfrequenzgang und gleichem Phasengang wie die Störung im Ausblendbereich kann das Störspektrum im Ausblendbereich genügend stark reduziert werden, um den gewünschten Dämpfungsfaktor zu erzielen.

Außer den im Ausblendbereich beinhalteten Subträgern müssen nur die an der Grenze des Ausblendbereichs und gegebenenfalls ein oder wenige unmittelbar außerhalb der Grenze des Ausblendbereiches gelegener bzw. gelegene Subträger mit Null geladen werden.

Damit werden neben den im Inneren des Ausblendbereiches befindlichen Subträgern jeweils immer nur ein oder wenige, zur Grenze des Ausblendbereiches benachbarter bzw. benachbarte Subträger mit Null beladen und somit eine sehr geringe Anzahl an Subträgern ohne Modulation belassen, wodurch die zur Übertragung nicht verwertbaren Subträger auf ein Minimum reduziert werden können.

Aufgabe der Erfindung ist es, ein eingangs genanntes Verfahren anzugeben, mit dessen Hilfe es möglich ist, eine wirksame Unterdrückung von schmalen Frequenzbändern in Ausblendbereichen durchzuführen, und bei dem nur eine relativ geringe Anzahl an Subträgern zur Ausblendung der schmalen Frequenzbereiche freigehalten werden muß.

Erfindungsgemäß wird dies dadurch erreicht, daß die Aussteuerung der Kompensationstöne so berechnet wird, daß das Integral des gewichteten, gesendeten Leistungsdichte-Spektrums über den gesamten Frequenzbereich minimiert wird.

Die auf diese Weise übertragenen Kompensationstöne können durch die angewandte statistische Berechnungsmethode sehr genau und mit relativ geringem rechnerischen Aufwand berechnet werden.

Erfindungsgemäß wird die Aufgabe weiters dadurch gelöst, daß die Aussteuerung der Kompensationstöne so berechnet wird, daß das Integral über den gesamten Frequenzbereich des gewichteten, quadrierten Betrags der Fourier-Transformierten des gesendeten Datensignals über eine vorbestimmbare Anzahl von Datenblöcken minimiert wird.

Die Genauigkeit der dabei verwendeten deterministischen Berechnungsmethode erhöht sich mit der Anzahl der für die Berechnung zur Verfügung stehenden Datenblöcke. Da der Speicheraufwand dafür nicht beliebig vergrößert werden kann, ergibt sich ein von der Rechnerkapazität abhängiges Ergebnis.

Gemäß einer weiteren Fortbildung der Erfindung können bereits gesendete Daten bei der Berechnung berücksichtigt werden. Durch die Einbeziehung der bereits gesendeten Daten kann die Genauigkeit der Berechnung erhöht werden.

Gemäß einem weiteren Merkmal der Erfindung kann zwischen den zu Blöcken zusammengefaßten Daten entweder ein Guard-Intervall oder ein zyklisches Prefix übertragen wird. Das erfindungsgemäße Verfahren kann für beide Arten der Intervall-Bildung angewandt werden.

Nachfolgend wird die Erfindung anhand der in den Zeichnungen dargestellten Ausführungsbeispiele eingehend erläutert. Es zeigt dabei

Fig.1 den Betragsfrequenzgang eines Prototypfilters;
Fig.2 den durch Interferenz von drei Subkanälen hervorgerufenen Betragsfrequenzgang;
Fig.3 ein Ersatzschaltbild einer Inversen-Diskreten- Fourier-Transformation;
Fig.4 den Betragsfrequenzgang eines Prototypfilters;
Fig.5 den Phasenfrequenzgang eines Prototypfilters;
Fig.6 den Betrag der Übertragungsfunktionen von drei Subträgern;
Fig.7 den Phasengang der Übertragungsfunktionen von drei Subträgern;
Fig.8 die übereinandergeschobenen und normierten Nebenkeulen eines Prototypfilters für M=16;
Fig.9 den Betragsfrequenzgang mit einem Ausblendbereich;
Fig.10a und 10b jeweils eine schematische Darstellung eines Ausblendbereiches;
Fig.11 ein Blockschaltbild des Sendeteils einer Ausführungsform des erfindungsgemäßen Übertragungssystems;
Fig.12 ein Blockschaltbild des Sendeteils einer weiteren Ausführungsform des erfindungsgemäßen Übertragungssystems;
Fig.13 den Betragsfrequenzgang von Übertragungsfunktionen mit einem Ausblendbereich;
Fig.14 den Betrag der Sollübertragungsfunktionen für einen Kompensationsimpuls;
Fig.15 eine schematische Darstellung des Sendesignals bei Verwendung eines zyklischen Prefix;
Fig.16 und Fig.17 Betragsfrequenz- und Phasengang der Übertragungsfunktionen von Subträgern;
Fig.18 eine schematische Darstellung der Vektoren g(n);
Fig.19 die Sollübertragungsfunktion und zwei Kompensationsimpulse unterschiedlicher Länge;
Fig. 20 eine schematische Darstellung von v(n);
Fig. 21 Leistungsdichtespektrum für Übertragung mit M=512 Subkanälen;
Fig.22 bis 24 vergrößerte Ausschnitte der Ausblendbereiche aus Fig.21;
Fig. 25 Leistungsdichtespektrum für Übertragung mit M=1024 Subkanälen;

Fig.26 bis 28 vergrößerte Ausschnitte der Ausblendbereiche aus Fig.25;

Fig. 29 Leistungsdichtespektrum für Übertragung mit M=2048 Subkanälen;

Fig.30 bis 32 vergrößerte Ausschnitte der Ausblendbereiche aus Fig.21;

Fig.33 ein Blockschaltbild eines Übertragungssystems zur Durchführung einer Ausführungsform des erfindungsgemäßen Verfahrens;

Fig.34 eine Tabelle mit den für ein herkömmliches Übertragungsverfahren verwendeten nullgeladenen Subträgern;

Fig.35 ein Diagramm des Leistungsdichtespektrums für ein Übertragungsverfahren entsprechend Fig.34;

Fig.36 Details des Diagramms nach Fig.35;

Fig.37 eine Tabelle mit den für eine Ausführungsform des erfindungsgemäßen Verfahrens verwendeten nullgeladenen Subträgern;

Fig.38 ein Diagramm des Leitungsdichtespektrums für ein Übertragungsverfahren entsprechend Fig.37;

Fig.39 Details des Diagramms nach Fig.38;

Fig.40 eine Tabelle mit den für eine Ausführungsform des erfindungsgemäßen Verfahrens verwendeten nullgeladenen Subträgern;

Fig.41 ein Diagramm des Leitungsdichtespektrums für ein Übertragungsverfahren entsprechend Fig.40;

Fig.42 Details des Diagramms nach Fig.41;

Fig.43 eine Tabelle mit den für eine Ausführungsform des erfindungsgemäßen Verfahrens verwendeten nullgeladenen Subträgern;

Fig.44 ein Diagramm des Leitungsdichtespektrums für ein Übertragungsverfahren entsprechend Fig.43 und

Fig.45 Details des Diagramms nach Fig.44.

Bei auf Frequenzmultiplex beruhenden Übertragungssystemen, die unter den Bezeichnungen Mehrträgerverfahren, Orthogonal Frequency Multiplex (OFDM) und Discrete Multitone (DMT) bekanntgeworden sind, ist ein breites Frequenzband in eine Vielzahl sehr schmaler Frequenzbänder bzw. Subkanäle unterteilt, denen jeweils gleichmäßig voneinander beabstandete Subträger zugeordnet sind.

Eine Vielzahl von Anwendungen des DMT-Verfahren haben die xDSL-Übertragungsverfahren, z.B. ADSL, mit sich gebracht. Die Modulation der Sendedaten auf der Senderseite erfolgt durch eine Inverse-Diskrete-Fourier-Transformation (IDFT), während die übertragenen Daten empfängerseitig mit Hilfe der Diskreten-Fourier-Transformation (DFT) demoduliert werden.

Zur Vereinfachung der im folgenden dargelegten Überlegungen wird zunächst die Übertragung über einen völlig dispersionsfreien Kanal betrachtet, sodaß keine Verzerrungen der übertragenen Sendesignale auftreten.

Der zu übertragende Datenstrom $A_k = 0,1,2,...$ wird in Blöcken der Länge M zusammengefaßt, wobei M die Anzahl der Subkanäle bedeutet. Gleichzeitig ist M die Blocklänge der IDFT.

$$\begin{aligned} 0.\text{ Block} \quad \mathbf{A_0} &= \begin{bmatrix} A_0 & A_1 & \ldots & A_{M-1} \end{bmatrix}^T \\ 1.\text{ Block} \quad \mathbf{A_M} &= \begin{bmatrix} A_M & A_{M+1} & \ldots & A_{2M-1} \end{bmatrix}^T \\ &\vdots \\ m.\text{ Block} \quad \mathbf{A_{mM}} &= \begin{bmatrix} A_{mM} & A_{mM+1} & \ldots & A_{mM+M-1} \end{bmatrix}^T \\ &\vdots \end{aligned}$$

Für ein reelles Sendesignal können nur M/2 der Daten frei gewählt werden, die restlichen M/2 Daten sind konjugiert komplex zu den erstgenannten M/2 Daten (z.B. ADSL mit 256 Tönen ergibt M = 512)

$$\begin{aligned} \mathbf{a_0} &= \begin{bmatrix} a_0 & a_1 & \ldots & a_{M-1} \end{bmatrix}^T &= \sqrt{M} \cdot \mathrm{IDFT_M}\{\mathbf{A_0}\} \\ \mathbf{a_M} &= \begin{bmatrix} a_M & a_{M+1} & \ldots & a_{2M-1} \end{bmatrix}^T &= \sqrt{M} \cdot \mathrm{IDFT_M}\{\mathbf{A_M}\} \\ &\vdots \\ \mathbf{a_{mM}} &= \begin{bmatrix} a_{mM} & a_{mM+1} & \ldots & a_{mM+M-1} \end{bmatrix}^T &= \sqrt{M} \cdot \mathrm{IDFT_M}\{\mathbf{A_{mM}}\} \\ &\vdots \end{aligned}$$

Die Blöcke $a_{kM}$, k= 0,1,2,... werden seriell an den Ausgang gelegt und übertragen.

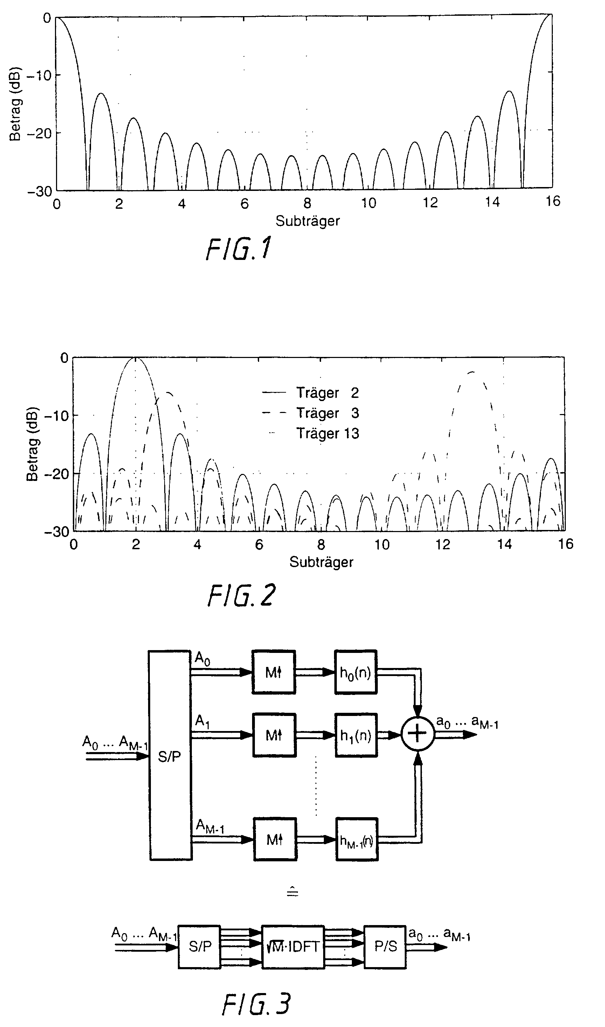

In Fig.1 ist für ein Übertragungssystem mit M=16 Subkanälen das Übersprechen eines Subkanals 0 auf die übrigen Subkanäle dargestellt. Ein Subkanal setzt sich im Frequenzbereich somit aus einer Hauptkeule und mehreren Nebenkeulen zusammen. Eine Überlagerung von drei der insgesamt sechzehn Subträgern ist in Fig.2 gezeigt.

Die Inverse-Diskrete-Fourier-Transformation (IDFT) kann durch einen Transmultiplexer, welcher in Fig.3 abgebildet ist, dargestellt werden, wobei die seriellen Daten nach einer Überabtastung, bei der jedem Datum M-1 Nullen hinzugefügt werden, parallel einem Satz von Filtern $h_k(n)$ zugeleitet werden, k= 0, 1, 2,..., M-1. Das Filter $h_0(n)$ ist dabei ein Prototypfilter, dessen Zeitbereich über die Länge M läuft, alle anderen Filter $h_k(n)$ k=1,2,...,M-1 stellen frequenzverschobene Versionen dieses Protoypfilters $h_0(n)$ dar.

$$h_0(n) = \begin{cases} \frac{1}{\sqrt{M}} & \text{für } n = 0, 1, \ldots, M-1 \\ 0 & \text{sonst} \end{cases} \quad \Longleftrightarrow \quad H_0(e^{j\theta}) = \frac{1}{\sqrt{M}} \frac{\sin\frac{M\theta}{2}}{\sin\frac{\theta}{2}} e^{-j\theta\frac{M-1}{2}}$$

Die weiteren Filter $h_k(n)$, k=1,2, M-1 ergeben sich durch Verschiebung des Prototypfilters $H_0(e^{j\theta})$ um $(2\pi/M)\cdot k$.

$$h_k(n) = h_0(n)e^{j\frac{2\pi}{M}kn} \quad \Longleftrightarrow \quad H_k(e^{j\theta}) = H_0\left(e^{j(\theta-\frac{2\pi}{M}k)}\right) \qquad (1)$$

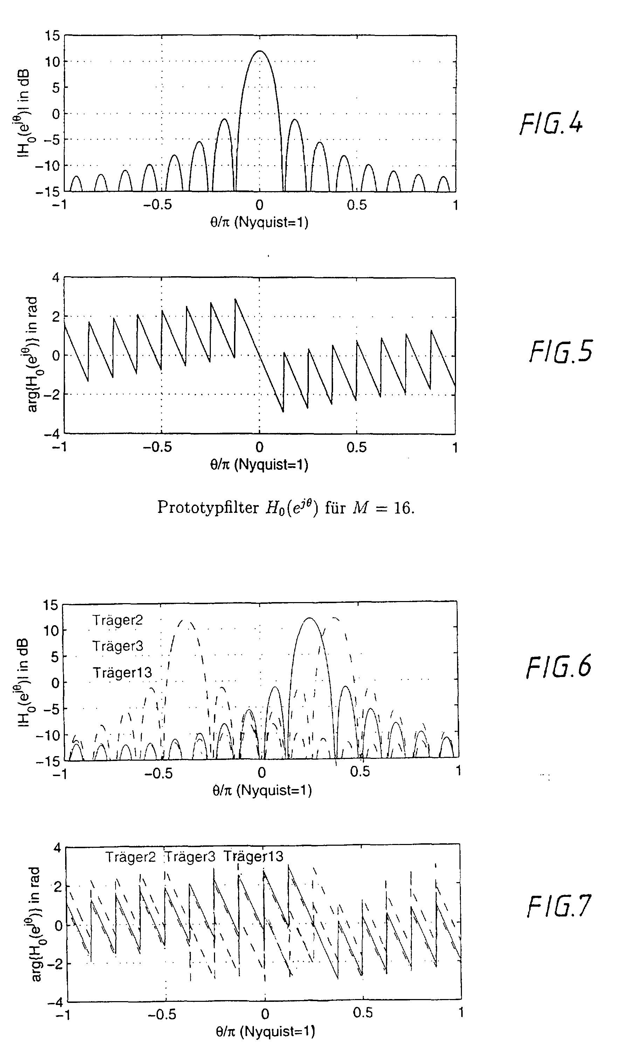

In Fig.4 und Fig.5 ist das zugehörige Bode-Diagramm des Prototypfilters für eine IDF-Transformation mit einer Blocklänge von M=16 dargestellt. Die Nebenkeulen unterscheiden sich relativ deutlich hinsichtlich ihrer Amplituden, die symmetrisch zur Hauptkeule bei $\theta/\pi=0$ abfallen. Kein wesentlicher Unterschied ist hingegen in den Frequenzgängen zu beobachten, wobei das Prototypfilter eine lineare Phase in allen Nebenkeulen aufweist. Das durch einen beliebigen Nutzkanal in einem Ausblendbereich hervorgerufene Störspektrum ist daher bis auf einen komplexen Skalierungsfaktor den durch andere Nutzkanäle hervorgerufenen Störspektren ähnlich.

Gemäß Fig.3 steuert das Datum k das Filter $h_k(n)$ bzw. $H_k(e^{j\theta})$ an. Der größte Anteil der Signalleistung wird im Band $(k-1)2\pi/M \leq \theta < (k+1)2\pi/M$ übertragen.

Aufgrund der Nebenkeulen der Übertragungsfunktion $H_k(e^{j\theta})$ wird aber auch ein nicht zu vernachlässigender Anteil in den Nachbarkanälen übertragen. Soll die Leistungsdichte in einem bestimmten Frequenzbereich unter einem bestimmten Wert bleiben, ist es daher auch nicht ausreichend, das oder die diesem Bereich entsprechenden Filter nicht anzuregen, da die Nebenkeulen in den Übertragungsfunktionen benachbarter Kanäle bewirken, daß die Leistungsdichte noch immer einen nicht zu vernachlässigenden Wert besitzt. Durch das langsame Abklingen der Nebenkeulen wirken diese sich als Übersprechen in den benachbarten Kanälen aus, wobei die erste Nebenkeule ein nur um 13 dB geringeres Maximum als die Hauptkeule aufweist (Fig.4).

In Fig.6 und 7 sind der besseren Übersichtlichkeit wegen bei einem M=16 Subkanäle aufweisenden Frequenzbereich nur die Beträge und Phasen der Übertragungsfunktionen für die Kanäle k=2,3 und 13 abgebildet. Aus Fig.6 und 7 geht klar hervor, daß das Ansteuern der drei gezeigten Filter nicht nur in deren eigenen Subkanälen sondern aufgrund der geringen Nebenkeulendämpfung auch in den anderen Subkanälen zu beachtlichen Leistungsdichten führt, wobei im gezeigten Fall jeder Subkanal eine Auswirkung auf alle Subkanäle hat, sodaß sich insgesamt fünfzehn Nebenkeulen in jedem Subkanal überlagern. Jeder Subkanal entspricht dabei einem Frequenzbereich von $2\pi/16$. Bei wesentlich höherer Subkanalanzahl ist die effektive Nachbar-Wechselwirkung nur auf die jeweils nächsten Subkanäle beschränkt.

Werden die Nebenkeulen der drei gezeigten Übertragungsfunktionen in einem Subkanal z.B. $4\cdot2\pi/16 \leq \theta < 5\cdot2\pi/16$ betrachtet, so ist ersichtlich, daß ihr Maximum zwar unterschiedliche Werte besitzt, aber alle sich überlappenden Nebenkeulen einen ähnlichen Verlauf besitzen.

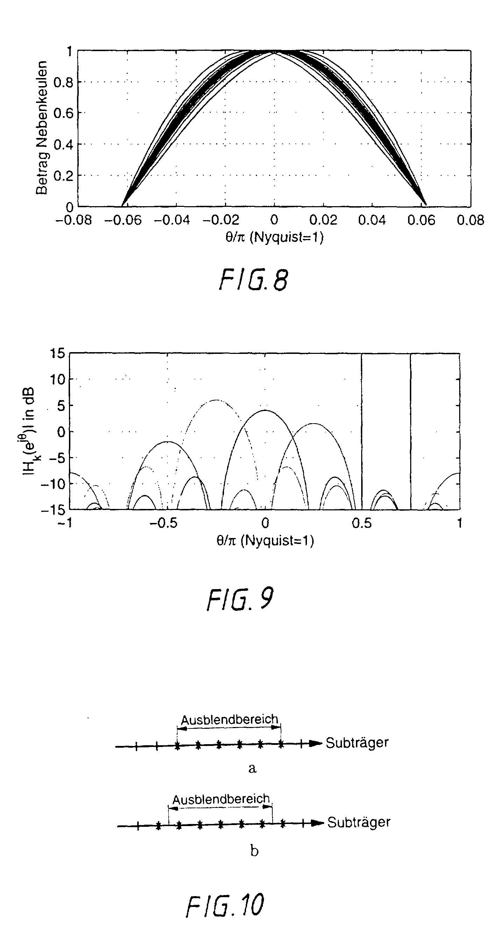

Dies wird aus der Darstellung gemäß Fig.8 deutlich, in der alle Nebenkeulen des Prototypfilters $h_0(n)$ für M=16 auf den Wert 1 normiert und im Frequenzbereich übereinandergeschoben sind. Alle Nebenkeulen besitzen einen ähnlichen Verlauf bezüglich ihres Betragsspektrums.

Wie aus Gleichung 1 bereits zu ersehen ist, besitzt das Prototypfilter und alle verschobenen weiteren Filter eine lineare Phase. In Fig.7 sind die Phasenverläufe für die Übertragungsfunktionen von drei verschiedenen Subkanälen wiedergegeben, sie besitzen alle die gleiche Steigung und können durch Addition einer konstanten Phase ineinander übergeführt werden.

In dem gezeigten Frequenzband kann es nun erforderlich sein, bestimmte verbotene Bereiche in ihrer Leistungsdichte so herabzusetzen, daß sie keine störende Auswirkung auf bereits existierende Sendebereiche, z.B. Amateur- und Rettungsfunkbereiche, haben können. Ein konkretes Beispiel für eine solche Absenkung kann darin bestehen, die Leistungsdichte in einem Bereich von 7 bis 7,1 MHz von - 60 dBm auf -80 dBm verläßlich zu reduzieren (VDSL).

Im folgenden wird zunächst angenommen, daß der Ausblendbereich genau zwischen zwei Subträgern k und k+1 lokalisiert ist, sodaß der entsprechende Frequenzbereich zwischen $k \cdot 2\pi/M \leq \theta < (k+1)2\pi/M$ liegt. Die beiden angenommenen Träger k und k+1 übertragen den Hauptanteil ihrer Sendeleistung in dem gewählten Ausblendbereich und müssen daher auf jeden Fall auf Null gesetzt werden. Weiter entfernt liegende Träger, z.B. k-1, k-2, k+2, k+3, wirken zwar nicht durch ihre Haupt- aber durch ihre Nebenkeulen auf den auszublendenden Frequenzbereich. Die Gesamtstörung der Nachbarträger errechnet sich daher durch die komplexe Addition aller in der Intensität noch relevanten Nebenkeulen.

Die Störung eines Nachbarkanals auf den Ausblendbereich ist das Datum des Nachbarkanals multipliziert mit der Wirkung der Nebenkeule im Ausblendbereich.

Fig.9 stellt die Störungen der Nachbarkanäle für ein System mit M=8 Subträgern dar. Der ausgewählte Ausblendbereich ist $2 \cdot 2\pi/8 \leq \theta < 3 \cdot 2\pi/8$. Träger 2 und 3 sind auf Null gesetzt, die Belegung der restlichen Träger ist beliebig. Gemäß Stand der Technik war es bisher üblich, auch weiter außerhalb des unmittelbaren Ausblendbereiches liegende Subträger mit Null zu laden, um damit zu erreichen, daß die durch sie bewirkten Nebenkeulen nicht im Ausblendbereich stören können. Dadurch war man aber gezwungen auf eine relativ große Anzahl an Subkanälen außerhalb des Ausblendbereiches zu verzichten. Die Umsetzung des erfindungsgemäßen Verfahrens behebt diesen Nachteil auf die im folgenden beschriebene Weise.

Da wie vorstehend bereits festgestellt, alle Nebenkeulen einen ähnlichen Betragsverlauf besitzen, muß die Gesamtstörung im Ausblendbereich einen Betragsverlauf besitzen, welcher dem der Nebenkeulen ähnlich ist. Diese Eigenschaft ist unabhängig von den Daten der Nachbarkanäle, welche nur das Maximum und die Phase der Gesamtstörung bestimmen.

Es ist daher möglich, einen Impuls zu entwerfen, der innerhalb des Ausblendbereiches ein Spektrum besitzt, das dem der Gesamtstörung möglichst ähnlich ist und diesen mit dem Sendespektrum zu übertragen. Außerhalb dieses Bereiches soll sein Spektrum möglichst klein sein. Die Daten der Nachbarkanäle bestimmen nur die Anregung des Filters.

Wird der Ausblendbereich nicht durch zwei benachbarte Subträger begrenzt, so müssen zusätzlich alle Subträger innerhalb des Ausblendbereiches Null gesetzt werden. Ein solcher Fall ist in Fig.10a dargestellt. Die mit "*" gekennzeichneten Subträger sind auf Null zu setzen.

Endet der Ausblendbereich nicht genau bei einem sondern zwischen zwei Subträgern, so muß der jeweils äußere ebenfalls auf Null gesetzt werden, wie aus Fig.10b ersichtlich ist. Unter Umständen müssen auch die nächsten angrenzenden Subkanäle mit Null geladen werden.

Umfaßt der Ausblendbereich mehrere Subträger, so reicht es nicht aus, nur einen Kompensationsimpuls zu übertragen, da das störende Maximum der Nebenkeulen jeweils zwischen zwei benachbarten Subträgern auftritt. In Fig. 10a müssen daher fünf und in Fig.10b sechs Kompensationsimpulse erzeugt werden.

Erfindungsgemäß wird daher für jeden sich zwischen den im Ausblendbereich beinhalteten Subträgern bzw. an diesen angrenzenden Subträgern mit Nullladung erstreckenden Frequenzbereich zusätzlich jeweils ein Impuls zur Kompensation der im Ausblendbereich auftretenden Nebenkeulen übertragen, welcher Impuls jeweils ein den in den Zwischenbereichen auftretenden Nebenkeulen ähnliches Frequenzspektrum aufweist und der entsprechend den Datenwerten der in den jeweiligen Zwischenbereichen auftretenden Nebenkeulen ausgesteuert wird, wobei der oder die Kompensationsimpulse orthogonal zu den informationsübertragenden Subträgern übertragen werden.

Aus den Datenwerten einer vorbestimmbaren Anzahl von Subkanälen wird die Amplitude und Phase der Nebenkeulenspektren für den Ausblendbereich berechnet und der zu jedem Frequenzzwischenbereich gehörige Kompensationsimpuls durch Addition der einzelnen, dafür berechneten komplexen Nebenkeulenspektren ermittelt. Vor der Übertragung werden der oder die so ermittelten Kompensationsimpulse dem Sendesignal so überlagert, daß der Ausblendbereich von störenden Nebenkeulen befreit wird.

Eine besonders hohe Anzahl an nutzbaren Subträgern läßt sich erreichen, indem außer den im Ausblendbereich beinhalteten Subträgern nur die an der Grenze des Ausblendbereichs bzw. die nahe außerhalb der Grenze des Ausblendbereiches gelegenen Subträger mit Null geladen werden. Unter Ladung wird die Aussteuerung eines Subträgers verstanden.

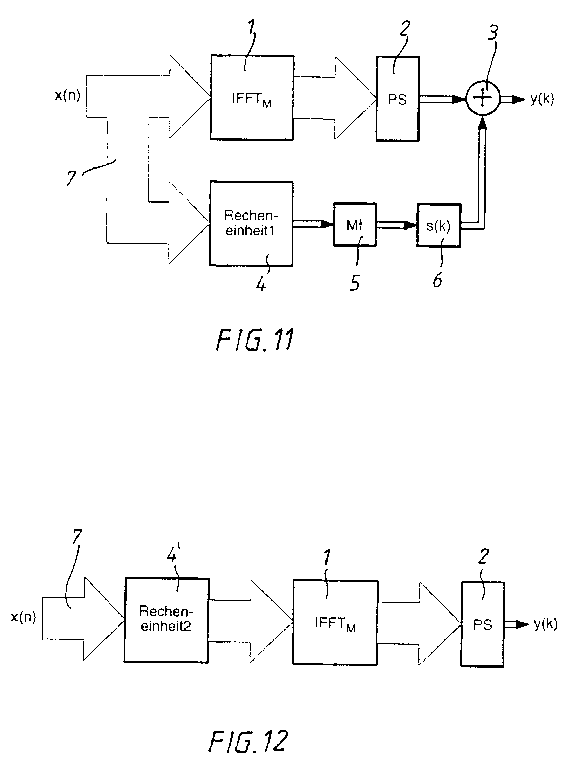

In Fig.11 und 12 sind Varianten von Sendeteilen eines erfindungsgemäßen Übertragungssystem in Form von Prinzipblockschaltbildern angegeben, mit denen das erfindungsgemäße Verfahren durchgeführt werden kann.

In Fig.11 umfaßt die Sendeeinheit eine Inverse-Diskrete-Fourier-Transformationseinheit (IDFT) 1, mit der eine Vielzahl den Sendefrequenzbereich unterteilende Subkanäle mit zugeordneten Subträgern modulierbar ist. Die nicht dargestellte Empfangseinheit beinhaltet eine entsprechende Diskrete-Fourier-Transformationseinheit (DFT), mit der die übertragenen Daten demoduliert werden können.

Über die IDFT-Einheit 1 können alle im Ausblendbereich beinhalteten bzw. die an den Ausblendbereich anschließenden Subträger mit Null geladen werden, sodaß im gewünschten Ausblendbereich keine Hauptkeulen von Subträgern auftreten können.

Die zu übertragenden Daten werden über die Eingabeeinheit 7 als Vektor x(n) an die IDFT-Einheit 1 und an eine Recheneinheit 4 weitergegeben. Letztere dient der Berechnung von durch außerhalb des Ausblendbereiches liegende Subkanäle hervorgerufenen Nebenkeulen. Aus diesen kann die Amplitude und Phase der Gesamtstörung im Ausblendbereich durch Addition der Einzelstörungen berechnet werden. Umfaßt der Ausblendbereich mehrere Subträger, so ist für jeden ganz oder teilweise innerhalb des Ausblendbereiches auftretenden Frequenzbereich zwischen zwei Subträgern jeweils eine eigene Recheneinheit 4 vorgesehen, die an ihrem Ausgang jeweils über eine Einheit zur Überabtastung 5 mit dem Eingang eines zugeordneten Kompensationsfilters 6 verbunden ist, dessen Übertragungsfunktion gleich oder ähnlich dem Spektrum der Nebenkeulen des entsprechenden Frequenzzwischenbereiches ist. In Fig.11 ist ein Blockschaltbild für nur einen Frequenzzwischenbereich dargestellt.

Der Ausgang des Kompensationsfilters s(k) 6 ist mit einem ersten Eingang eines Subtraktionsglieds 3 und der Ausgang der IDFT-Einheit 1 mit einem zweiten Eingang des Subtraktionsglieds 3 verbunden, sodaß am Ausgang des Subtraktionsglieds 3 ein störungskompensiertes Sendesignal abgreifbar ist.

Wird das Filter 6 durch einen Impuls mit der in der Recheneinheit 4 berechneten Amplitude und Phase der Gesamtstörung angeregt, ergibt sich im Ausblendbereich ein Kompensationssignal, dessen Spektrum dem der Störung sehr ähnlich ist.

Der Ausgang der IDF-Einheit 1 berechnet die inverse diskrete Fouriertransformation des anliegenden Datenvektors x(n) und eine Parallel/Serienwandel-Einheit 2 wandelt den parallelen, aus der IDFT-Einheit 1 kommenden Datenstrom in einen seriellen Symbolfluß um. Weil im Datenvektor x(n) die an den Ausblendbereich anschließenden Subträger mit Null geladen worden sind, setzt sich das gesamte Signal in diesem Frequenzbereich nur aus Übersprechanteilen zusammen. Das Ausgangssignal des Filters 6 besitzt innerhalb des Ausblendbereiches ein ähnliches Spektrum wie das Spektrum des Übersprechsignals. Durch Subtraktion dieser beiden Signale wird das Sendespektrum im Ausblendbereich stark reduziert, z.B. um mehr als 20 dB.

Liegt der Ausblendbereich nicht genau zwischen zwei benachbarten Subträgern, sondern dehnt sich dieser über mehrere Subkanäle aus bzw. soll das Leistungsdichtespektrum in mehreren, voneinander getrennten Bändern unterdrückt werden, muß der Zweig mit der Recheneinheit 4 und dem Filter 6 für jeden Frequenzbereich zwischen zwei Subträgern zusätzlich ausgeführt werden. Die jeweiligen Filter s(k) 6 der einzelnen Zweige müssen dann das Störspektrum im jeweiligen Zwischenbereich nachbilden. Die in Fig.12 dargestellte Variante benutzt die im Ausblendbereich enthaltenen Subträger, um die Kompensation der störenden Nebenkeulen durchzuführen. Die Übertragungsfunktion der Filter $s_i(k)$ spannen einen Vektorraum auf. Um die Daten im Empfänger durch Anwenden einer Diskreten Fourier-Transformation rückgewinnen zu können, ist es erforderlich, daß die Übertragungsfunktionen der Filter $s_i(k)$ orthogonal zu den Übertragungsfunktionen der verwendeten Töne der Inversen-Fourier-Transformationseinheit gewählt werden. In diesem Fall bietet sich als Basis des durch die $s_i(k)$ aufgespannte Vektorraumes das Set der Übertragungsfunktionen der nicht verwendeten IFFT-Kanäle an. Werden diese Funktionen als Basis verwendet, so ist es möglich, die Filterungen mit den $s_i(k)$ in die Inverse Fourier-Transformation hineinzuziehen. In diesem Fall werden die Subkanäle, welche mit den Ausblendbereichen überlappen, nicht mit Null sondern mit in der Recheneinheit 4' berechneten Werten geladen, sodaß IDFT und Filterung die gleichen Ergebnisse liefern. Die Recheneinheit 4' berechnet die neuen Werte, mit denen die Subkanäle, welche mit den Ausblendbereichen überlappen, geladen werden müssen. Die Daten in den anderen Subkanälen werden dabei nicht verändert. Dazu sind am Eingang der Recheneinheit 4' die zu übertragenden Daten anlegbar und am Ausgang der Recheneinheit 4' die im Ausblendbereich beinhalteten Subträger bzw. an diesen anschließenden Subträger mit einer die Nebenkeulen kompensierenden Beladung abgreifbar, welche zusammen mit den unveränderten Beladungen der restlichen, außerhalb des Ausblendbereiches liegenden Subträger von der IDFT-Einheit 1 einlesbar sind. In der Einheit 2 wird die Umwandlung der parallelen Daten in ein serielles Sendesignal vorgenommen.

Somit werden für jeden sich zwischen den im Ausblendbereich beinhalteten Subträgern bzw. an diesen angrenzenden Subträgern erstreckenden Frequenzbereich die in diesen Frequenzzwischenbereichen auftretenden Nebenkeulen und daraus die erforderliche Beladung der im Ausblendbereich beinhalteten Subträger bzw. an diesen angrenzenden Subträger berechnet, um eine Kompensation der im Ausblendbereich auftretenden Nebenkeulen zu erreichen, wobei die im Ausblendbereich beinhalteten Subträger bzw. die an diesen angrenzenden Subträger mit der berechneten Beladung übertragen werden und wobei die verbleibenden, restlichen Subträger unverändert bleiben. Zur Demonstration des erfindungsgemäßen Verfahrens wurden drei Beispiele für eine VDSL-Übertragungsstrecke gerechnet. Als Nyquist-Frequenz wurde 10,5 MHz gewählt. Das analoge Sendefilter besitzt einen Durchlaßbereich von 0,3 MHz bis 10,1 MHz. Innerhalb dieses Bereiches befinden sich drei Amateurfunkbänder, nämlich 1,81 MHz - 2,00 MHz, 3,50 MHz - 3,80 MHz und 7,00 MHz - 7,10 MHz.

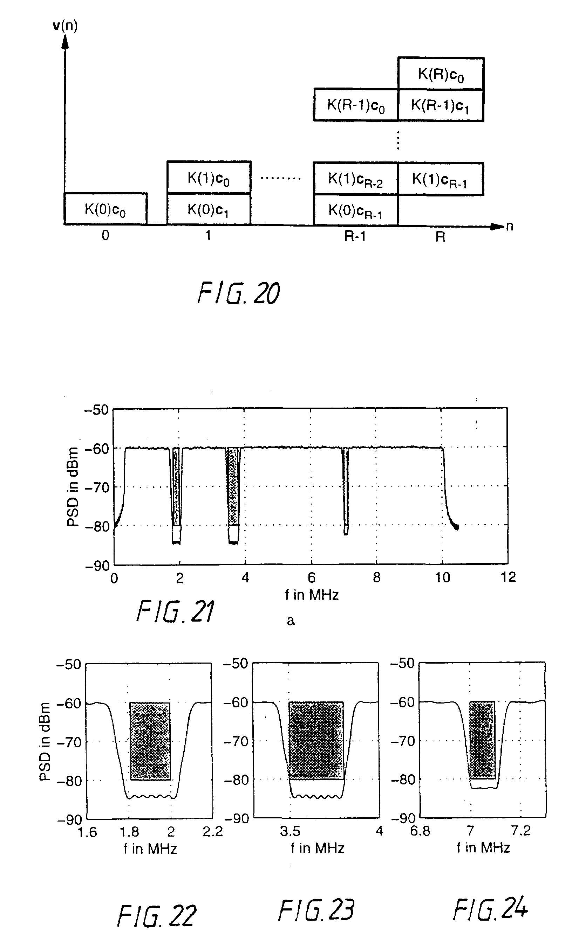

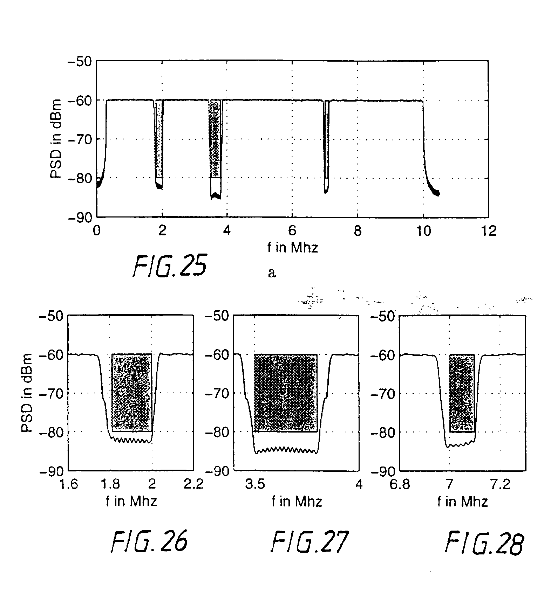

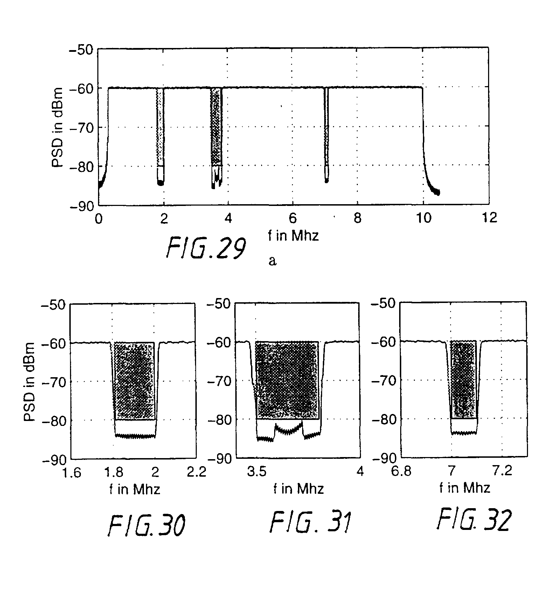

In den Beispielen gemäß Fig.21 - 24, Fig.25 - 28 und Fig.29 - 32, in denen die erzielten Leistungsdichtespektren gezeigt sind, wird eine Möglichkeit zur Unterdrückung der Amateurfunkbänder mit Hilfe des erfindungsgemäßen Verfahrens gezeigt, das Abfallen des Leistungsdichtespektrums unterhalb von 0,3 MHz bzw. oberhalb von 10 MHz muß mit dem analogen Sendefilter erfolgen und wird nicht weiter berücksichtigt. Die Anzahl der Kanäle M beträgt 512 (Fig.21-24) , 1024 (Fig.25-28) und 2048 (Fig.29-32). Die grau hinterlegten Flächen stellen jeweils die Amateurfunkbänder dar, wobei Fig. 22-24 , Fig.26-28 und Fig.30-32 Vergrößerungen der Ausblendbereiche sind.

In den nachstehend angegebenen Tabellen sind die Parameter für die einzelnen Bereiche angeführt. In der ersten Spalte wird angegeben, in welchen Subkanälen ein Kompensationsimpuls übertragen wird. Die zweite Spalte gibt an, welche Subträger für die Erzeugung der Kompensationsimpulse verwendet und nicht mit Informationssymbolen geladen werden. Wird das erfindungsgemäße Verfahren nicht verwendet, müssen die in der letzten Spalte angegeben Kanäle mit Null geladen werden.

|  | Kompensationsimpulse | benötigte Subkanäle | Nullsetzen |
|---|---|---|---|
| 1. Band | $k = 43, 44,...,49$ | $k = 42, 43,..., 51$ | $k = 37, 38,...,56$ |
| 2. Band | $k = 85, 86,...,92$ | $k = 84, 85....,94$ | $k = 79, 80,...,99$ |
| 3. Band | $k = 170,171,172,173$ | $k = 170, 171,..., 174$ | $k = 163, 164,...,180$ |
| M=512 | | | |

|  | Kompensationsimpulse | benötigte Subkanäle | Nullsetzen |
|---|---|---|---|
| 1. Band | $k = 87, 88,..., 97$ | $k = 86, 87,..., 99$ | $k = 82, 83,..., 103$ |
| 2. Band | $k = 170, 171,..., 185$ | $k = 168, 169,..., 188$ | $k = 165, 166,..., 191$ |
| 3. Band | $k = 340, 341,..., 346$ | $k = 339, 340,..., 347$ | $k = 335, 336,..., 353$ |
| M=1024 | | | |

|  | Kompensationsimpulse | benötigte Subkanäle | Nullsetzen |
|---|---|---|---|
| 1. Band | $k = 176, 177,..., 195$ | $k = 175, 176,..., 197$ | $k = 171, 172,...,200$ |
| 2. Band | $k = 341, 342,...,349$ <br> $363, 364,...,371$ | $k = 339, 340,..., 373$ | $k = 336, 337,..., 376$ |
| 3. Band | $k = 682, 683,..., 692$ | $k = 681, 682,..., 694$ | $k = 677, 678,..., 698$ |
| M= 2048 | | | |

In allen drei Beispielen sind sowohl die untersten als auch die mittleren Subträger nicht geladen. Dieses Nullsetzen wird nicht zum Ausblenden der Amateurfunkbänder benötigt, soll aber das Leistungsdichtespektrum bei tiefen und hohen Frequenzen reduzieren.

Für die Symbole der Subträger M/2+1 bis M-1 gilt $A_1 = A^*_{M-1}$, 1 =M/2 + 1, M/2 +2 ,..., M-1. Diese Ladevorschrift ist für ein reelles Sendesignal notwendig.

Beim dritten Beispiel (Fig. 29 - 32) liegt das zweite Amateurfunkband über den Kanälen 341 bis 370. Es werden aber nur für die Subbänder 341, 342,..., 349, 363, 364, ... 371 Kompensationsimpulse entworfen. In den mittleren Subbändern sind die Störungen schon stark genug gedämpft, es müssen keine Kompensationsimpulse angewandt werden.

Die Berechnung des Kompensationsimpulses wird nachfolgend angegeben.

Es kann gezeigt werden, daß die Energie einer Impulsantwort eines Filters in einem Frequenzbereich $\theta_1$ bis $\theta_2$ sich als quadratische Form darstellen läßt. Die Impulsantwort s(n) sei M Taps lang, sodaß die Energie $E_S$ definiert ist als

$$E_s = \frac{1}{2\pi} \int_{\theta_1}^{\theta_2} \mathbf{s}^t \psi^*(e^{j\theta}) \psi^T(e^{j\theta}) \mathbf{s} \, d\theta = \frac{1}{2\pi} \mathbf{s}^t \int_{\theta_1}^{\theta_2} \psi^*(e^{j\theta}) \psi^T(e^{j\theta}) \, d\theta \, \mathbf{s} = \frac{1}{2\pi} \mathbf{s}^t \Theta(\theta_1, \theta_2) \mathbf{s} \quad (7)$$

$$s = [s(0)s(1)\dots s(M-1)]^T \text{ ist die Impulsantwort, } \psi(e^{j\theta}) \text{ ist}$$

$$\psi(e^{j\theta}) = [1 \; e^{-j\theta} \; \dots \; e^{-j\theta(M-1)}]^T \; . \tag{6}$$

wobei

$$\Theta(\theta_1, \theta_2) = \int\limits_{\theta_1}^{\theta_2} \psi^*(e^{j\theta}) \psi^T(e^{j\theta}) \, d\theta \; .$$

$s^t$ bedeutet s transponiert und konjugiert.

Für jeden Frequenzzwischenbereich (oder Teilband), welcher von zwei benachbarten Subträgern begrenzt wird und innerhalb des Ausblendbereiches liegt, muß ein eigener Kompensationsimpuls entworfen werden.

Innerhalb dieses Frequenzzwischenbereiches muß der Kompensationsimpuls das Spektrum der Störung möglichst gut wiedergeben. Zu diesem Zweck muß der Kompensationsimpuls innerhalb dieses Zwischenbereiches eine noch zu bestimmende Übertragungsfunktion besitzen.

Außerhalb dieses Frequenzzwischenbereiches ist zwischen den Zwischenbereichen, welche ebenfalls im Ausblendbereich liegen, und Zwischenbereichen, welche außerhalb des Ausblendbereiches liegen, zu unterscheiden. Da die Kompensationsimpulse in anderen Frequenzbändern selbst als Störer wirken, müssen diese für die benachbarten Subkanäle, die innerhalb des Ausblendbereiches liegen, eine möglichst geringe Übertragungsfunktion aufweisen, um dort keine zusätzlichen Störungen hervorzurufen. In außerhalb des Ausblendbereiches liegenden Frequenzbereichen ist die Forderung nach einer stark gedämpften Übertragungsfunktion nicht ganz so streng, muß aber ebenfalls berücksichtigt werden. Der Grund dafür liegt darin, daß durch den deterministischen Zusammenhang zwischen der Anregung des Kompensationsimpulses und den Daten der genützten Subträger konstruktive Interferenzen außerhalb des Ausblendbereiches entstehen können, welche zu Leistungsüberhöhungen führen.

Im Empfänger sollen die Daten mittels einer Diskreten Fourier-Transformation (DFT) demoduliert werden. Die DFT kann genauso wie die IDFT in einen Transmultiplexer übergeführt werden, dessen Filter orthogonal zueinander sind. Damit nach der Demodulation mit Hilfe der DFT alle Daten voneinander unabhängig sind, müssen alle Sendefilter ebenfalls orthogonal sein. Das Protoypfilter und die durch Verschiebung daraus abgeleiteten Filter erfüllen diese Forderung bereits. Zusätzlich muß der Kompensationsimpuls auf die Filter jener Subträger, welche Nutzdaten übertragen, orthogonal sein. Die einzelnen Kompensationsimpules müssen untereinander nicht orthogonal sein.

Wie vorstehend bereits erwähnt, muß der Kompensationsimpuls innerhalb jenes Frequenzzwischenbereiches, für das er entworfen worden ist, eine nachstehend noch genauer erläuterte Übertragungsfunktion möglichst gut approximieren. Das Spektrum innerhalb des Zwischenbereiches muß jenem der Störung möglichst ähnlich sein.

Die Störung setzt sich aus der Überlagerung mehrerer Nebenkeulen zusammen, wobei die Nebenkeulen mit dem größten Betragsmaximum den stärksten Störeinfluß haben. Aus diesem Grund wird die Sollübertragungsfunktion des Kompensationsimpulses aus den Übertragungsfunktionen der beiden großen Nebenkeulen zusammengesetzt. Außerhalb seines Teilbandes ist die Sollübertragungsfunktion ident Null.

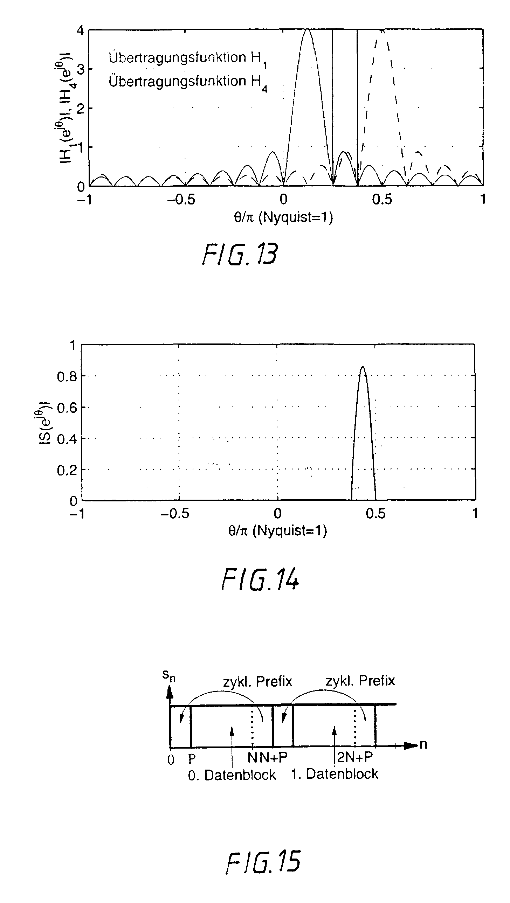

Soll der Kompensationsimpuls für das Teilband $k \cdot 2\pi/M \le \theta < (k+1) \cdot 2\pi/M$ entworfen werden, so sind die beiden benachbarten Impulse $H_{k-1}(e^{j\theta})$ und $H_{k+2}(e^{j\theta})$ hauptverantwortlich für die Störungen im betrachteten Frequenzzwischenbereich, wie in Fig.13 für M=16 und k=2 und dem Betrag der Übertragungsfunktionen $H_1(e^{j\theta})$ und $H_4(e^{j\theta})$ dargestellt ist. Die Übertragungsfunktionen für die beiden Subträger k-1 und k+2 lauten

$$H_{k-1}(e^{j\theta}) = \frac{1}{\sqrt{M}} \frac{\sin\frac{M}{2}\left(\theta - \frac{2\pi}{M}(k-1)\right)}{\sin\frac{1}{2}\left(\theta - \frac{2\pi}{M}(k-1)\right)} e^{-j\left(\theta - \frac{2\pi}{M}(k-1)\right)\frac{M-1}{2}} \tag{10}$$

$$H_{k+2}(e^{j\theta}) = \frac{1}{\sqrt{M}} \frac{\sin\frac{M}{2}\left(\theta - \frac{2\pi}{M}(k+2)\right)}{\sin\frac{1}{2}\left(\theta - \frac{2\pi}{M}(k+2)\right)} e^{-j\left(\theta - \frac{2\pi}{M}(k+2)\right)\frac{M-1}{2}} \; . \tag{11}$$

Im betroffenen Frequenzbereich von $0,25 \leq \theta/\pi < 0,375$ sind die Nebenkeulen von diesen beiden Übertragungsfunktionen als Hauptstörungsquelle angenommen worden. Die weiter entfernten Übertragungsfunktionen liefern einen entsprechend niedrigeren Störbeitrag, der für die Berechnung der Sollübertragungsfunktion vernachlässigt wird.

Das Maximum der rechten und der linken Hauptnebenkeule von $H_{k-1}(e^{j\theta})$ bzw. $H_{k+2}(e^{j\theta})$ tritt bei $\theta = (2\pi/M)$ (k + 0,5) auf. Einsetzen an dieser Stelle liefert

$$H_{k-1}\left(e^{j\theta}\right)\Big|_{\theta=\left(k+\frac{1}{2}\frac{2\pi}{M}\right)} = \frac{1}{\sqrt{M}}\frac{-1}{\sin\frac{3\pi}{2M}}e^{-j\frac{3\pi}{2}\left(1-\frac{1}{M}\right)} \qquad (12)$$

$$H_{k+2}\left(e^{j\theta}\right)\Big|_{\theta=\left(k+\frac{1}{2}\frac{2\pi}{M}\right)} = \frac{1}{\sqrt{M}}\frac{-1}{\sin\frac{3\pi}{2M}}e^{j\frac{3\pi}{2}\left(1-\frac{1}{M}\right)}\ . \qquad (13)$$

Die beiden Nebenkeulen besitzen, wie aus Fig.13 ersichtlich, das gleiche Betragsmaximum jedoch unterschiedliche Phase. Die Phasendifferenz beider Nebenkeulen an der Stelle $\theta = (2\pi/M)$ (k + 0,5) ist

$$\Delta\phi = \arg\left\{H_{k+2}(e^{j\theta})\right\} - \arg\left\{H_{k-1}(e^{j\theta})\right\}\Big|_{\theta=\left(k+\frac{1}{2}\frac{2\pi}{M}\right)} = 3\pi - \frac{3\pi}{M}\ . \qquad (14)$$

Aus diesem Grund wird die Sollübertragungsfunktion

$$S(e^{j\theta}) = \begin{cases} -\frac{1}{2}\left(e^{j\frac{\Delta\phi}{2}}H_{k-1}(e^{j\theta}) + e^{-j\frac{\Delta\phi}{2}}H_{k+2}(e^{j\theta})\right) & \text{für} \quad k\frac{2\pi}{M} \leq \theta < (k+1)\frac{2\pi}{M} \\ 0 & \text{sonst} \end{cases} \qquad (15)$$

gewählt, wie aus den Fig.13 und 14 ersichtlich. Diese Wahl der Sollübertragungsfunktion erfolgt relativ heuristisch und kann durch eine optimiertes Kriterium möglicherweise verbessert werden. Da die Sollübertragungsfunktion nur innerhalb des Ausblendbereiches einen von Null verschiedenen Wert aufweist, wirkt sie auch in anderen Frequenzbereichen nicht störend.

Als weitere Einschränkung der Klasse an möglichen Kompensationsimpulsen muß allerdings das Orthogonalitätskriterium vorgesehen werden, damit der Empfang der einzelnen Filter ungestört bleibt. Damit die Daten im Empfänger mit Hilfe einer DFT-Transformation demoduliert und getrennt werden können, ist es erforderlich, daß der Kompensationsimpuls orthogonal auf die Übertragungsfunktionen aller verwendeter Subkanäle steht.

Die Indizes aller geladenen Subträger mögen in der Menge K zusammengefaßt sein. Die K Funktionen

$$h_k(n) = \frac{1}{\sqrt{M}}e^{j\frac{2\pi}{M}kn} \quad \text{für} \quad k \in \mathcal{K}, n = 0, 1, \ldots, M-1 \qquad (16)$$

spannen eine orthonormale Basis für den $K$-dimensionalen Unterraum $\mathcal{K}$ auf. In der Menge $\mathcal{M}$ seien die Indizes aller Subträger zusammengefaßt, $\mathcal{M} = \{0,1,...,M - 1\}$. Die Funktionen

$$h_k(n) = \frac{1}{\sqrt{M}}e^{j\frac{2\pi}{M}kn} \qquad \text{für} \qquad k, n = 0, 1, ..., M-1 \qquad (17)$$

spannen den $M$-dimensionalen Raum $\mathcal{M}$ auf, wobei $\mathcal{K}$ ein Unterraum von $\mathcal{M}$ ist. Die Übertragungsfunktionen der verwendeten Subträger liegen im Unterraum $\mathcal{K}$. Der Kompensationsimpuls muß orthogonal auf diese Funktionen sein, d.h. er muß in einem zu $\mathcal{K}$ senkrechten Unterraum $\mathcal{L} = \mathcal{K}^\perp$ liegen. Der sich hier anbietende Raum ist die Differenz $\mathcal{L} = \mathcal{M} / \mathcal{K}$. Für diesen $L = M - \mathcal{K}$-dimensionalen Unterraum stellen die Funktionen

$$h_k(n) = \frac{1}{\sqrt{M}} e^{j \frac{2\pi}{M} kn} \quad \text{für} \quad k \in \mathcal{L}, n = 0, 1, \ldots, M - 1 \qquad (18)$$

eine orthonormale Basis dar. Die Menge $\mathcal{L}$ ist definiert als $\mathcal{L} = \mathcal{M} / \mathcal{K}$. Der Kompensationsimpuls kann nun durch Linearkombination der Basisvektoren (18) dargestellt werden,

$$g(n) = \sum_{l \in \mathcal{L}} c_l h_l(n) \quad \text{bzw.} \quad \boldsymbol{g} = \boldsymbol{H} \boldsymbol{c} \qquad (19)$$

in Vektorschreibweise, wobei $\boldsymbol{g} = [g(0) g(1) \ldots g(M-1)]^T$ gilt. Im Spaltenvektor $\boldsymbol{c}$ sind die Koeffizienten $c_l$ der Linearkombination zusammengefaßt. Die Spalten der Matrix $\boldsymbol{H}$ sind die Basisvektoren (18),

$$\boldsymbol{H} = [\boldsymbol{h}_{l_0} \boldsymbol{h}_{l_1} \ldots \boldsymbol{h}_{l_{L-1}}] \quad \text{mit} \quad \{l_0 l_1 \ldots l_{L-1}\} = \mathcal{L} . \qquad (20)$$

Zur Berechnung des Kompensationsimpulses kann nun folgende Optimierungsaufgabe angeschrieben werden:

$$g(n) = \arg \min_{g(n) \in \mathcal{L}} W_1 \int_{k \frac{2\pi}{M}}^{(k+1) \frac{2\pi}{M}} |G(e^{j\theta}) - S(e^{j\theta})|^2 \, d\theta + \sum_{l=2}^{Q} W_l \int_{\theta_{l_1}}^{\theta_{l_2}} |G(e^{j\theta})|^2 \, d\theta \qquad (21)$$

$G(e^{j\theta})$ ist die Fourier Transformation von $g(n)$, dem gesuchten Kompensationsimpuls. Die Minimierung erfolgt also über alle Funktionen des Raums $\mathcal{L}$, welcher ja senkrecht auf die verwendeten Übertragungsfunktionen steht. Das erste Integral stellt die Abweichung von $G(e^{j\theta})$ von der Sollübertragungsfunktion $S(e^{j\theta})$ dar. Diese Abweichung wird innerhalb des Teilbandes $k \frac{2\pi}{M} \leq \theta < (k+1) \frac{2\pi}{M}$ berechnet. Außerhalb dieses Bandes ist die Sollübertragungsfunktion $S(e^{j\theta})$ ja ident Null. Das zweite Integral berechnet die Energie von $G(e^{j\theta})$ innerhalb der Bänder $\theta_{l_1} \leq \theta < \theta_{l_2}$. Wie erwähnt, soll der Kompensationsimpuls außerhalb seines Bandes eine stark gedämpfte Übertragungsfunktion besitzen. Die Summation erfolgt über Bereiche, in denen eine verschieden starke Unterdrückung gewünscht wird. Innerhalb des Ausblendbereichs wird eine größere Dämpfung erforderlich sein als außerhalb. Dieses Verhalten kann mittels der Gewichtsfaktoren $W_l$ eingestellt werden.

Ausmultiplizieren von (21) liefert

$$g(n) = \arg\min_{g(n)\in\mathcal{L}} W_1 \int_{k\frac{2\pi}{M}}^{(k+1)\frac{2\pi}{M}} \left(G(e^{j\theta}) - S(e^{j\theta})\right)^* \left(G(e^{j\theta}) - S(e^{j\theta})\right)^T d\theta +$$

$$\sum_{l=2}^{Q} W_l \int_{\theta_{l_1}}^{\theta_{l_2}} G(e^{j\theta})^* (G(e^{j\theta})^T d\theta \tag{22}$$

$$= \arg\min_{g(n)\in\mathcal{L}} W_1 \int_{k\frac{2\pi}{M}}^{(k+1)\frac{2\pi}{M}} \left(g^t\psi^*(e^{j\theta}) - s^t\psi^*(e^{j\theta})\right)\left(\psi^T(e^{j\theta})g - \psi^T(e^{j\theta})s\right) d\theta +$$

$$\sum_{l=2}^{Q} W_l \int_{\theta_{l_1}}^{\theta_{l_2}} g^t\psi^*(e^{j\theta})\psi^T(e^{j\theta})g \, d\theta \tag{23}$$

$$= \arg\min_{g(n)\in\mathcal{L}} W_1 \int_{k\frac{2\pi}{M}}^{(k+1)\frac{2\pi}{M}} \left(g^t\psi^*(e^{j\theta})\psi^T(e^{j\theta})g - s^t\psi^*(e^{j\theta})\psi^T(e^{j\theta})g - \right.$$

$$\left. g^t\psi^*(e^{j\theta})\psi^T(e^{j\theta})s + s^t\psi^*(e^{j\theta})\psi^T(e^{j\theta})s\right) d\theta + \tag{24}$$

$$\sum_{l=2}^{Q} W_l \int_{\theta_{l_1}}^{\theta_{l_2}} g^t\psi^*(e^{j\theta})\psi^T(e^{j\theta})g \, d\theta$$

$$= \arg\min_{g(n)\in\mathcal{L}} W_1\left(g^t\Theta(\theta_{l_1},\theta_{l_2})g - s^t\Theta(\theta_{l_1},\theta_{l_2})g - g^t\Theta(\theta_{l_1},\theta_{l_2})s + s^t\Theta(\theta_{l_1},\theta_{l_2})s\right) +$$

$$\sum_{l=2}^{Q} W_l g^t\Theta(\theta_{l_1},\theta_{l_2})g \tag{25}$$

$$= \arg\min_{g(n)\in\mathcal{L}} \sum_{l=1}^{Q} W_l g^t\Theta(\theta_{l_1},\theta_{l_2})g -$$

$$W_1\left(s^t\Theta(\theta_{l_1},\theta_{l_2})g + g^t\Theta(\theta_{l_1},\theta_{l_2})s - s^t\Theta(\theta_{l_1},\theta_{l_2})s\right) \tag{26}$$

In der vorletzten Zeile wurde Gl. (8) eingesetzt. Zur kürzeren Schreibweise sind weiters die beiden Größen $\theta_{l_1} = k\frac{2\pi}{M}$ und $\theta_{l_2} = (k+1)\frac{2\pi}{M}$ eingeführt worden. Im Spaltenvektor $s$ ist die Impulsantwort der Sollübertragungsfunktion zusammengefaßt,

$$[s]_n = -\frac{1}{2}\left(e^{j\frac{\Delta\phi}{2}} h_{k-1}(n) + e^{-j\frac{\Delta\phi}{2}} h_{k+2}(n)\right) \quad \text{für} \quad n = 0, 1, \ldots, M-1 \,. \tag{27}$$

Die direkte Minimierung über $g(n)$, wie sie in (26) durchgeführt wird, ist aus zwei Gründen nicht sinnvoll: Erstens muß über eine große Anzahl von Parametern (M Koeffizienten) minimiert werden, und zweitens muß die Optimierung unter der Randbedingung $g(n) \in \mathcal{L}$ stattfinden. Sinnvoller ist es, über den Koeffizientenvektor **c** aus (19) zu minimieren: Erster wird die Anzahl der zu optimierenden Paramter kleiner, und zweitens kann die Minimierung ohne Nebenbedingungen erfolgen, denn der Ansatz (19) berücksichtigt die Nebenbedingung $g(n) \in \mathcal{L}$ bereits. Einsetzten von (19) in (26) liefert folgendes:

$$c_{opt} = \arg \min_{c} \sum_{l=1}^{Q} W_l c^t H^t \Theta(\theta_{l_1}, \theta_{l_2}) H c - \tag{28}$$

$$W_1 \left( s^t \Theta(\theta_{l_1}, \theta_{l_2}) H c + c^t H^t \Theta(\theta_{l_1}, \theta_{l_2}) s - s^t \Theta(\theta_{l_1}, \theta_{l_2}) s \right) \tag{29}$$

Die Lösung dieser Optimierungsaufgabe lautet

$$c_{opt} = H^{-1} \left( H^t \sum_{l=1}^{Q} W_l \Theta(\theta_{l_1}, \theta_{l_2}) \right)^{-1} W_1 H^t \Theta(\theta_{l_1}, \theta_{l_2}) s . \tag{30}$$

Einsetzten in (19) liefert die Impulsantwort des gesuchten Kompensationsimpulses.

$$g = H c_{opt} = \left( H^t \sum_{l=1}^{Q} W_l \Theta(\theta_{l_1}, \theta_{l_2}) \right)^{-1} W_1 H^t \Theta(\theta_{l_1}, \theta_{l_2}) s \tag{31}$$

Simulationen haben gezeigt, daß dieser Impuls die geforderten Eigenschaften nur ungenügend erfüllt. Aus diesem Grund muß für den Kompensationsimpuls eine Länge größer als $M$ zugelassen werden. An diesem Punkt ist es nun auch sinnvoll, die Einschränkung des verzerrungsfreien Kanals fallenzulassen.

Es wird angenommen, daß der Kanal eine Gedächtnislänge von maximal $P$ besitzt, die Impulsantwort des Kanals also maximal $P + 1$ Taps lang ist. Für DMT Systeme wird ein zyklisches Prefix verwendet, welches die Entzerrung im Empfänger wesentlich vereinfacht.

Beim zyklischen Prefix werden die letzen $P$ Symble eines Datenblocks zu Beginn eines Blockes vorgesendet, siehe *Fig. 15.* Wird nur die Übertragung eines einzigen Impulses betrachtet, so kann für die Übertragungssequenz $y(n)$

$$y(n) = \begin{cases} a_{M-P+n} & \text{für} \quad n = 0, 1, \ldots, P - 1 \\ a_{n-P} & \text{für} \quad n = P, P + 1, \ldots, N + P - 1 \end{cases} \tag{32}$$

geschrieben werden. Einsetzten der IDFT für $a_n$ liefert

$$y(n) = \begin{cases} \frac{1}{M} \sum_{k=0}^{M-1} A_k e^{j \frac{2\pi}{M} k(M-P+n)} = \frac{1}{M} \sum_{k=0}^{M-1} A_k e^{j \frac{2\pi}{M} k(n-P)} & \text{für} \quad n = 0, 1, \ldots, P - 1 \\ \frac{1}{M} \sum_{k=0}^{M-1} A_k e^{j \frac{2\pi}{M} k(n-P)} & \text{für} \quad n = P, P + 1, \ldots, N + P - 1 . \end{cases} \tag{33}$$

Wie zu sehen ist, fällt aufgrund der $M$-Periodizität der IDFT die Fallunterscheidung weg, die Übertragungseqeunz lautet

$$y(n) = \frac{1}{M} \sum_{k=0}^{M-1} A_k e^{j\frac{2\pi}{M}k(n-P)} \quad \text{für} \quad n = 0, 1, \ldots, N + P - 1 \; . \tag{34}$$

Dieses Sequenz kann ebenfalls wieder durch einen Transmultiplexer erzeugt werden, wobei

$$h_k(n) = \frac{1}{\sqrt{M}} e^{j\frac{2\pi}{M}(n-P)}, \qquad n = 0, 1, \ldots, N + P - 1, \tag{35}$$

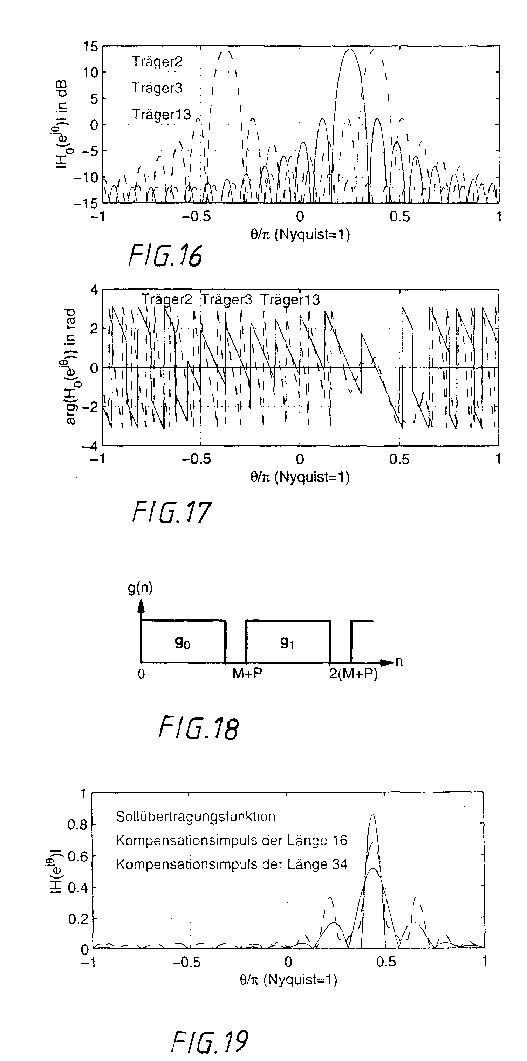

gilt. *Fig. 16,17* zeigt einige Übertragungsfunktionen für ein System mit $M$ = 16 und $P$ = 5. Es ist deutlich zu sehen, daß es hier zu keiner schönen Überlagerung der Nebenkeulen kommt. Aus diesem Grund kann die Kompensationsmethode hier nicht verwendet werden.

Aus diesem Grund wird bei der Übertragung kein zyklisches Prefix verwendet, sondern ein Guard Interval der Länge $P$.

Der im vorigen Abschnitt berechnete Kompensationsimpuls genügt dieser Bedingung. Soll der Kompensationsimpuls jedoch länger als $M$ Taps sein, müssen nach $M$ Koeffizienten immer $P$ Nullen folgen. Diese Konstruktion bewirkt, daß die Sendesequnz nach $M$ Werten ein Guard Interval der Länge $P$ beinhaltet.

$$g = [g_0^T 0_P g_1^T 0_P \cdots g_{R-1}^T]^T \tag{36}$$

Die Vektoren $g_k$ beinhalten jeweils $M$ Koeffizienten. Die anschließenden $P$ Nullen sind im Zeilenvektor $0_P$ enthalten. Damit im Empfänger die Demodulation und Trennung der Daten ebenfalls wieder durch eine DFT erfolgen kann, müssen alle Vektoren $\boldsymbol{g}_k$ im Unterraum $\mathcal{L}$ liegen. Für den Kompensationsimpuls kann folgende Optimierungsaufgabe angeschrieben werden:

$$g(n) = \arg \min_{\substack{g_0(n)\in\mathcal{L} \\ g_1(n)\in\mathcal{L} \\ \vdots \\ g_{R-1}(n)\in\mathcal{L}}} W_1 \int_{k\frac{2\pi}{M}}^{(k+1)\frac{2\pi}{M}} |G(e^{j\theta}) - S(e^{j\theta})|^2 \, d\theta + \sum_{l=2}^{Q} W_l \int_{\theta_{l_1}}^{\theta_{l_2}} |G(e^{j\theta})|^2 \, d\theta \tag{37}$$

Aufgrund der Nebenbedingung $\boldsymbol{g}_k \in \mathcal{L}$ kann wieder

$$g_k = Hc_k \tag{38}$$

angesetzt werden. Die Matrix $\boldsymbol{H}$ ist in (20) definiert. Unter Berücksichtigung von (36) und (38) wird der Frequenzgang des Kompensationsimpulses zu

$$G(e^{j\theta}) = \sum_{n=0}^{(R-2)(M+L)+M} g(n)e^{-j\theta n} = \sum_{k=0}^{R-1} \boldsymbol{g}_k^T \psi_k(e^{j\theta}) = \sum_{k=0}^{R-1} \boldsymbol{c}_k^T \boldsymbol{H}^T \psi_k(e^{j\theta}) \; . \tag{39}$$

Fig. 18: Schematische Darstellung von $g(n)$, wenn die Länge größer als $M$ ist.
Die neu eingeführte Größe $\psi_k(e^{j\theta})$ lautet

$$\psi_k(e^{j\theta}) = [e^{-jk(M+L)\theta}\, e^{-j(k(M+L)+1)\theta}\, \cdots\, e^{-j(k(M+L)+M-1)\theta}]^T\;. \tag{40}$$

Wird in (37) eingesetzt und ausmultipliziert, ergibt sich folgendes Minimierungsproblem:

$$\begin{pmatrix} c_0 \\ c_1 \\ \vdots \\ c_{R-1} \end{pmatrix} = \arg \min_{\substack{c_0 \\ c_1 \\ \vdots \\ c_{R-1}}} \; \sum_{l=1}^{Q} W_l \sum_{k=0}^{R-1}\sum_{\kappa=0}^{R-1} c_k^t H^t \Theta_{k,\kappa}(\theta_{l_1},\theta_{l_2}) H c_\kappa - \tag{41}$$

$$W_1\left(\sum_{m=0}^{R-1}\Big(s^t\Theta_{0,m}(\theta_{l_1},\theta_{l_2})H c_m + c_m^t H^t\Theta_{m,0}(\theta_{l_1},\theta_{l_2})s\Big) - s^t\Theta_{0,0}(\theta_{l_1},\theta_{l_2})s\right) \tag{42}$$

Die Matrix $\Theta_{k,\kappa}(\theta_{l_1},\theta_{l_2})$ ist

$$\Theta_{k,\kappa}(\theta_{l_1},\theta_{l_2}) = \int_{\theta_{l_1}}^{\theta_{l_2}} \psi_k^*(e^{j\theta})\psi_\kappa^T(e^{j\theta})\, d\theta\;. \tag{43}$$

Die Lösung für obiges Minimierungsproblem lautet

$$\begin{pmatrix} c_0 \\ c_1 \\ \vdots \\ c_{R-1} \end{pmatrix} = \begin{pmatrix} A_{0,0} & A_{0,1} & \cdots & A_{0,R-1} \\ A_{1,0} & A_{1,1} & \cdots & A_{1,R-1} \\ \vdots & \vdots & \ddots & \vdots \\ A_{R-1,0} & A_{R-1,1} & \cdots & A_{R-1,R-1} \end{pmatrix}^{-1} \begin{pmatrix} B_0 \\ B_1 \\ \vdots \\ B_{R-1} \end{pmatrix} \tag{44}$$

mit

$$A_{m,n} = H^t \sum_{l=1}^{Q} W_l \Theta_{m,n}(\theta_{l_1},\theta_{l_2}) H \quad \text{und} \quad B_m = H^t \Theta_{m,0}(\theta_{l_1},\theta_{l_2})\;. \tag{45}$$

Mit (36) und (38) kann der Kompensationsimpuls berechnet werden.

*Fig. 19* zeigt die Sollübertragungsfunktion sowie Kompensationsimpulse unterschiedlicher Länge für ein System mit **M** = 16 und **P** = 2. In diesem Beispiel wurde der Ausblendbereich von $0.25 \le \theta/\pi < 0.625$ gewählt. Die Kompensationsimpulse sind für das Band $0.375 \le \theta/\pi < 0.5$ entworfen. Außerhalb des Ausblendbereichs sind die Bewertungsfaktoren sehr gering gewählt, wodurch die Überhöhungen entstehen. Der Kompensationsimpuls der Länge 34 besitzt deutlich bessere Eigenschaften als jener der Länge 16. Der Ausblendbereich sei der Bereich $k\frac{2\pi}{M} \le \theta < (k+1)\frac{2\pi}{M}$, das dafür berechnete Kompensationsfilter $S(e^{j\theta})$. Wird im Kanal *l* das Informationssymbol $A_l$ übertragen, so wirkt dieses mit der Übertragungsfunktion

$$N_l(e^{j\theta}) = \frac{1}{\sqrt{M}} H_l(e^{j\theta})$$

auf den Kanal (der Vorfaktor

$$\frac{1}{\sqrt{M}}$$

kommt wegen $\frac{1}{M}$ in der IDFT). Das Spektrum am Ausgang des Kompensationsfilters $S(e^{j\theta})$ soll innerhalb des Ausblendbereichs möglichst gut mit $N_l(e^{j\theta})$ übereinstimmen.

$$K_l S(e^{j\theta}) \approx A_l N_l(e^{j\theta}) \quad \text{für} \quad k\frac{2\pi}{M} \le \theta < (k+1)\frac{2\pi}{M} \tag{46}$$

Der Faktor $K_l$ ist die Anregung des Filters $G(e^{j\theta})$, mit welchem ja $S(e^{j\theta})$ approximiert wird. Eine totale Übereinstimmung ist innerhalb des gesamten Ausblendbereichs nicht möglich. Aus diesem Grund soll obige Gleichung bei der Frequenz $(k+\frac{1}{2})\frac{2\pi}{M}$ exakt mit einem Gleichheitszeichen erfüllt sein.

$$K_l S(e^{j\theta})\Big|_{\theta=(k+\frac{1}{2})\frac{2\pi}{M}} = A_l N_l(e^{j\theta})\Big|_{\theta=(k+\frac{1}{2})\frac{2\pi}{M}} \tag{47}$$

Die Übertragunsfunktionen ausgewertet an der Stelle $\theta = (k+\frac{1}{2})\frac{2\pi}{M}$ ergeben

$$N_l(e^{j\theta})\Big|_{\theta=(k+\frac{1}{2})\frac{2\pi}{M}} = \frac{(-1)^{k-l}}{M\sin\left(\frac{\pi}{M}(k-l+\frac{1}{2})\right)}\, e^{j\pi(k-l+\frac{1}{2})(-1+\frac{1}{M})} \quad \text{bzw.} \tag{48}$$

$$S(e^{j\theta})\Big|_{\theta=(k+\frac{1}{2})\frac{2\pi}{M}} = \frac{1}{\sqrt{M}\sin\frac{3\pi}{2M}}\,, \tag{49}$$

die Anregung des Filters $G(e^{j0})$ ist somit

$$K_l = A_l \frac{N_l(e^{j\theta})}{S(e^{j\theta})}\Big|_{\theta=(k+\frac{1}{2})\frac{2\pi}{M}} = A_l \frac{\sin\frac{3\pi}{2M}}{\sqrt{M}\sin\left(\frac{\pi}{M}(k-l+\frac{1}{2})\right)}\, e^{j\pi(k-l+\frac{1}{2})(-1+\frac{1}{M})}(-1)^{k-l}\,. \tag{50}$$

Mit dieser Anregung wird das Übersprechen kompensiert, welches das Informationssymbol $A_l$ des Kanals $l$ im Ausblendbereich verursacht. Jeder geladene Kanal bewirkt über die Nebenkeulen seiner Übertragungsfunktion eine Störung im Ausblendbereich. In der Menge $\mathcal{K}$ seien die Indizes aller geladener Subträger zusammengefaßt. Um das Übersprechen aller geladener Subträger im Bereich $k\frac{2\pi}{M} \le \theta < (k+1)\frac{2\pi}{M}$ zu kompensieren, muß das Filter $G(e^{j\theta})$ mit

$$K = \sum_{l\in\mathcal{K}} K_l = \sum_{l\in\mathcal{K}} A_l \frac{\sin\frac{3\pi}{2M}}{\sqrt{M}\sin\left(\frac{\pi}{M}(k-l+\frac{1}{2})\right)}\, e^{j\pi(k-l+\frac{1}{2})(-1+\frac{1}{M})}(-1)^{k-l} \tag{51}$$

angeregt werden. Es zeigt sich, daß nicht alle geladenen Kanäle berücksichtigt werden müssen. Im allgemeinen ist es ausreichend, nur die Kanäle innerhalb eines gewissen Bereichs um den Ausblendbereich herum zu berücksichtigen.

Im allgemeinen wird sich der Ausblendbereich über mehrere Teilbänder erstrecken. In diesem Fall muß für jedes Teilband $k\frac{2\pi}{M} \leq \theta < (k + 1)\frac{2\pi}{M}$, $k \in \mathcal{U}$, ein eigenes Kompensationsfilter $G_k(e^{j\theta})$ mit entsprechender Anregung vorgesehen werden. In der Menge $\mathcal{U}$ sind die Indizes aller Subkanäle zusammengefaßt, in welchen ein Kompensationsimpuls übertragen werden soll.

Wird der Kompensationsimpuls $g(n)$ direkt als FIR Filter implementiert, so muß jeder Koeffizient des Filters mit der Ansteuerung multipliziert werden. Bei großen Filterlängen wird der damit verbundene Rechenaufwand inakzeptabel. Eine effizientere Implementierung ist möglich, wenn berücksichtigt wird, daß sich der Kompensationsimpuls als Linearkombination der Basisfunktionen $h_l$, $l \in \mathcal{L}$, darstellen läßt (vgl. Gl. (19)).

$$Kg = K[g_0^\mathsf{T} 0_P g_1^\mathsf{T} 0_P \ldots g_{R-1}^\mathsf{T}]^\mathsf{T} = K[H^\mathsf{T} c_0^\mathsf{T} 0_P H^\mathsf{T} c_1^\mathsf{T} 0_P \ldots H^\mathsf{T} c_{R-1}^\mathsf{T}]^\mathsf{T} \tag{52}$$

Die Matrix $H$ ist in Gl. (20) definiert. Die Spalten der Matrix $H$ sind die Basisfunktionen der Linearkombination. $K$ ist die im letzten Kapitel berechnete notwendige Ansteuerung des Kompensationsimpulses. Einsetzen von (20) liefert

$$Kg = K\left[\begin{pmatrix} h_{l_0}^T \\ h_{l_1}^T \\ \vdots \\ h_{l_{L-1}}^T \end{pmatrix} \cdot c_0^T \ 0_P \ \begin{pmatrix} h_{l_0}^T \\ h_{l_1}^T \\ \vdots \\ h_{l_{L-1}}^T \end{pmatrix} \cdot c_1^T \ 0_P \ \ldots \ \begin{pmatrix} h_{l_0}^T \\ h_{l_1}^T \\ \vdots \\ h_{l_{L-1}}^T \end{pmatrix} \cdot c_1^T\right]^T . \tag{53}$$

Obige Gleichung bedeutet, daß zum Sendezeitpunkt des aktuellen Datenblocks die Basisfunktionen $h_l$, $l \in \mathcal{L}$, mit $Kc_0^T$ angeregt werden müssen. Zum Sendezeitpunkt des nächsten Datenblocks müssen diese Basisfunktionen mit $Kc_1^T$ ausgesteuert werden, usw. Das gilt nur dann, wenn nach dem ersten Block nur mehr Nullblöcke gesendet werden. Im normalen Sendebetrieb werden die Anregungsvektoren $v(n)$ zum Zeitpunkt $n$ durch eine Faltung berechnet, siehe dazu auch *Fig. 20*.

$$v(n) = \sum_{l=0}^{R-1} K(n - l) c_l \tag{54}$$

Die Überlappung der einzelnen Anregungssequenzen wird durch die Länge des Kompensationsimpulses hervorgerufen. Ist der Kompensationsimpuls $g(n)$ genau eine Symbolperiode lang ($M$ Taps), so wird der Anregungsvektor $v_n$ zu $v(n) = K(n) c_0^T$.

Die Basisfunktion $h_l$, $l \in \mathcal{L}$, ist nichts anderes als die Übertragungsfunktionen des IDFT Kanals $l$, skaliert mit $\sqrt{M}$. Zum Zeitpunkt $n$ müssen die Kanäle $l$, $l \in \mathcal{L}$, der IDFT mit $\sqrt{M}v(n)$ belegt werden.

Erstreckt sich der Ausblendbereich über mehrere Teilbänder, so ist obige Zerlegung für jedes Kompensationsfilter notwendig. Ist eine Basisfunktion in mehreren Kompensationsfiltern enthalten, so müssen die Anregungen für diese Basisfunktion addiert werden.

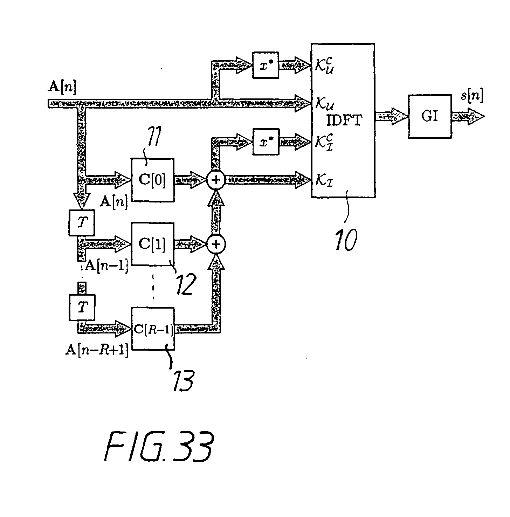

In Fig.33 ist eine weitere Ausführungsform des erfindungsgemäßen Verfahrens angegeben.

Es werden dabei zumindest ein Teil der in zumindest einem Ausblendbereich beinhalteten Subträger bzw. an diesen Ausblendbereich angrenzende Subträger als Kompensationstöne verwendet, deren Beladung so berechnet wird, daß das Integral des gewichteten, gesendeten Leistungsdichte-Spektrums über den gesamten Frequenzbereich minimiert wird.

Die nicht zur Informationsübertragung verwendeten Subträger bilden somit Kompensationstöne, die eine Reduktion des Leistungsdichtespektrums innerhalb des Ausblendbereiches ermöglichen. Die Anzahl der Ausblendbereiche innerhalb des zur Übertragung vorgesehenen Frequenzbandes ist dabei keinerlei Einschränkung unterworfen. Es müssen auch nicht alle innerhalb eines Ausblendbereiches vorhandenen Subträger tatsächlich als Kompensationstöne verwendet werden, wenn dies nicht erforderlich ist. Weiters ist es bei sehr nahe benachbarten Ausblendbereichen denkbar, die Subträger eines Ausblendbereiches auch als Kompensationstöne innerhalb des benachbarten Ausblendbereiches zu verwenden.

Die Berechnung der Beladung der Kompensationstöne beruht auf den im folgenden dargelegten Überlegungen.

In einem gewöhnlichen DMT-Übertragungssystem wird die Modulation der Subträger über eine Inverse Diskrete Fourier Transformation (IDFT) vorgenommen. Bei Anwenden der Folge $A_u[n]$ auf den Ton u ist der Ausgang der IDFT gegeben durch

$$s_u[n] = \sum_{l=-\infty}^{\infty} A_u[l] h_u[n - lN] \ . \qquad (101)$$

N = M + P ist die Länge des Zeitbereichs-Symbols plus dem Guard-Intervall. $h_u[n]$ ist die Impulsantwort des Tons u und kann geschrieben werden als

$$h_u[n] = \begin{cases} e^{j\frac{2\pi}{M}un} & \text{for} \quad n = 0, 1, \dots, M - 1 \\ 0 & \text{else.} \end{cases} \qquad (102)$$

Um ein reellwertiges Zeitsignal zu gewährleisten, wird $A^*_u[n]$ auf den Ton M-u angewandt, wobei M die Blocklänge der IDFT-Verarbeitung ist.

$$s_u[n] = \sum_{l=-\infty}^{\infty} \left( A_u[l] h_u[n - lN] + A_u^*[l] h_{M-u}[n - lN] \right) \qquad (103)$$

$$= \sum_{l=-\infty}^{\infty} \left( A_u[l] h_u[n - lN] + A_u^*[l] h_u^*[n - lN] \right) \qquad (104)$$

Um das Leistungsdichtespektrum (PSD) von $s_u[n]$ innerhalb des Ausblendbereiches zu verringern, werden die Töne i, $i \in K_l$ verwendet, um Kompensationssignale zu übertragen. Das Set $K_l$ enthält den Index jener Töne, die für die Kompensation verwendet werden sollten.

$$\begin{aligned} s_u[n] = \sum_{l=-\infty}^{\infty} \Bigg( & A_u[l] h_u[n - lN] \\ & + A_u[l] \Big( [c_u[0]]_1 h_{i_1}[n - lN] + \cdots + [c_u[0]]_I h_{i_I}[n - lN] \Big) \\ & \vdots \\ & + A_u[l - R + 1] \Big( [c_u[R-1]]_1 h_{i_1}[n - lN] + \cdots + [c_u[R-1]]_I h_{i_I}[n - lN] \Big) \Bigg) \\ & + CC \end{aligned}$$

$$(105)$$

Die erste Reihe entspricht einem gewöhnlichen DMT-Signal, wenn $A_u[l]$ auf den Ton u angewandt wird. I ist die Anzahl der Elemente, die im Set $K_l$ enthalten sind. In der zweiten Zeile werden die aktuellen Daten $A_u(l)$ nicht durch

den Ton u übertragen, aber gewichtete Versionen von $A_u(l)$ werden durch die Töne i, $i \in K_l$ übertragen. Die Gewichtung von $A_u[l]$ wird durch den Gewichtsvektor $\mathbf{c}_u[0]$ vorgenommen. $[\mathbf{c}_u[0]]_i$ ist die i-te Koordinate des Vektors $c_u[0]$. Die Übertragung der gewichteten Versionen von $A_u[l]$ durch die Töne i, $i \in K_l$ sollte den Effekt von $A_u[l]$ innerhalb des Ausblendbereiches minimieren. Die nächsten Zeilen entsprechen der Übertragung der gewichteten und verzögerten $A_u[l-r]$, r = 1,2,...R-1. Dies sollte den Effekt der vergangenen Werte $A_u[l-r]$ innerhalb des Ausblendbereiches minimieren. Die Zahl R bestimmt den Speicher. Die optimale Wahl der Gewichtsfaktoren $\mathbf{c}_u[r]$, r = 0,1,..., R-1 wird nachfolgend erläutert.

Eine mehr kompakte Notation kann durch Verwendung von Vektoren erreicht werden.

$$s_u[n] = \sum_{l=-\infty}^{\infty} \left( A_u[l]h_u[n - lN] + \sum_{r=0}^{R-1} A_u[l-r]\boldsymbol{c}_u^T[r]\boldsymbol{h}_{\mathcal{I}}[n - lN] \right) + \mathrm{CC} \qquad (106)$$

Der Spalten-Vektor $h_l[n]$ enthält die Impulsantworten zum Zeitpunkt n der zur Kompensation verwendeten Töne und kann geschrieben werden als

$$\boldsymbol{h}_{\mathcal{I}}^T = \begin{bmatrix} h_{i_1}[n] \ h_{i_2}[n] \ \ldots \ h_{i_I}[n] \end{bmatrix} \qquad \text{with} \qquad \{i_1, i_2, \ldots, i_I\} = \mathcal{K}_{\mathcal{I}}. \qquad (107)$$

Bis jetzt ist der Fall betrachtet worden, bei dem nur ein Ton u übertragen wird. Nun erörtern wird den Fall, für den nicht nur ein Ton sondern alle Töne u, $u \in K_u$ übertragen werden.

$$s[n] = \sum_{k \in \mathcal{K}_{\mathcal{U}}} s_u[n]$$

$$(108)$$

$$= \sum_{k \in \mathcal{K}_{\mathcal{U}}} \left( \sum_{l=-\infty}^{\infty} \left( A_u[l]h_u[n - lN] + \sum_{r=0}^{R-1} A_u[l-r]\boldsymbol{c}_u^T[r]\boldsymbol{h}_{\mathcal{I}}[n - lN] \right) + \mathrm{CC} \right)$$

$$= \sum_{l=-\infty}^{\infty} \left( \boldsymbol{A}^T[l]\boldsymbol{h}_{\mathcal{U}}[n - lN] + \sum_{r=0}^{R-1} \boldsymbol{A}^T[l-r]C[r]\boldsymbol{h}_{\mathcal{I}}[n - lN] \right) + \mathrm{CC} \qquad (109)$$

Das Set $K_u$ besteht aus dem Index der für die Informationsübertragung verwendeten Töne. Der Spaltenvektor $h_u[n]$ ist definiert durch

$$\boldsymbol{h}_{\mathcal{U}}^T = \begin{bmatrix} h_{u_1}[n] \ h_{u_2}[n] \ \ldots \ h_{u_U}[n] \end{bmatrix} \qquad \text{with} \qquad \{u_1, u_2, \ldots, u_U\} = \mathcal{K}_{\mathcal{U}}. \qquad (110)$$

$h_u[n]$ beinhaltet die Impulsantworten der verwendeten Töne zur Zeit n. U ist die Anzahl der Elemente im Set $K_u$. Der Spaltenvektor A[n] enthält Werte, die auf die verwendeten Töne angewandt werden.

$$\boldsymbol{A}^T[n] = \begin{bmatrix} A_{u_1}[n] \ A_{u_2}[n] \ \ldots \ A_{u_U}[n] \end{bmatrix} \qquad \{u_1, u_2, \ldots, u_U\} = \mathcal{K}_{\mathcal{U}}. \qquad (111)$$

Die x-te Zeile der Matrix **C**[r] wird aufgebaut durch den Zeilenvektor $c_{u_x}^T[r]$,

$$C[r] = \begin{pmatrix} c_{u_1}^T[r] \\ c_{u_2}^T[r] \\ \vdots \\ c_{u_U}^T[r] \end{pmatrix} \quad \text{for} \quad r = 0, 1, \ldots, R-1 \, . \quad (112)$$

Wie bereits zuvor erwähnt, sollen reellwertige Zeitbereichs-Signale erhalten werden. Dies beinhaltet, daß nur die Töne 1,2,...,M/2-1 irgend welche erwünschten komplexen Werte tragen können, die Töne M-1, M-2,...., M/2 + 1 müssen daher die konjugiert komplexen Werte übertragen. Die Töne 0 und M/2 sind mit Null geladen. Die Sets $K_u$ und $K_l$ beinhalten nur die Töne unterhalb M/2, sodaß $K_u \leq \{1,2,...., M/2 -1\}$ und K und $K_l \leq \{1,2,...,M/2 - 1\}$ wahr sein muß. Das Laden der Töne oberhalb von M/2 mit den konjugiert komplexen Werten wird durch die "CC"-Terme betrachtet, wobei CC für konjugiert komplex steht. Ein Ton kann entweder für die Übertragung von Information oder für die Kompensation aber nicht für beide verwendet werden. Der Schnittmenge der Sets $K_u$ und $K_l$ muß leer sein.

Mit Gleichung (109) ist es nun möglich, das Blockdiagramm der Ausführungsform des erfindungsgemäßen Verfahrens zu spezifizieren, welches in Fig.33 gezeigt ist. Der obere Teil des Blockdiagramms besteht aus einem IDFT 10 und ist ein gewöhnlicher DMT-Sender. Aufgrund der schwachen spektralen Beschränkung der Basisfunktionen der IDFT entsteht die bereits erwähnte Beeinflussung. Der Datenvektor A[n] wird auf die Töne u angewandt, $u \in K_u$. Um ein reellwertiges Zeitbereichssignal zu gewährleisten, werden die konjugiert komplexen Daten auf die Töne v, $v \in K_u^c = \{v | v = M - u, u \in K_u\}$ angewandt.

Um eine einfache Berechnung auf der Empfängerseite zu gewährleisten, muß ein Guard-Intervall oder ein zyklisches Prefix eingeführt werden.

Zunächst wird der Fall eines Guard-Intervalls betrachtet, aber in weiterer Folge werden die erhaltenen Resultate auf ein System mit einem zyklischen Prefix verallgemeinert. Wird ein Guard-Intervall der Länge P verwendet, werden P Nullen zwischen zwei aufeinanderfolgenden Zeitbereichs-Blöcken eingefügt.

Jeder durch **C**[r], r = 0,1,2,...R-1 bezeichnete Block 11, 12, 13 in Fig. 33 führt durch Anwendung des erfindungsgemäßen Verfahrens eine Multiplikation seiner Eingangsvektoren mit der Matrix **C**[r] durch. Die gesammelten Ergebnisse dieser Multiplikationen werden auf die Kompensationstöne angewandt. Die auf die Blöcke **C**[r] angewandten Eingangs-Vektoren sind die aktuellen Datenvektoren **A**[n] und verzögerte Versionen von diesen, A[n-r], r = 1,2,..., R-1. Das zusammengesetzte Ergebnis wird bei jedem Zeitschritt auf die Töne i, $i \in K_l$ angewandt. Um ein reellwertiges Zeitbereichssignal zu gewährleisten müssen wieder die Töne i, $i \in K_l^c = \{i | i = M -i, i \in K_l\}$ mit den komplex konjugierten Werten geladen werden.

Die Berechnung der Gewichtungsfaktoren wird wie folgt durchgeführt. Die Matrizen **C**[r], r = 0,1,...R-1 müssen berechnet werden, um das Integral des gewichteten Leistungsdichtespektrums zu minimieren. Um dies vornehmen zu können, muß ein analytischer Ausdruck des Leistungsdichtespektrums angegeben werden. Dies wird durch Berechnen der Autokorrelationsfunktion $R_s[n]$ der übertragenen Folge $s_n[n]$ und durch Anwenden der Fourier-Transformierten auf diese erreicht, woraus sich das Leistungsdichtespektrum $S_s(e^{j\theta})$ ergibt.

Weil s[n] ein zyklostatischer Prozeß ist, muß zuerst die zeitabhängige Funktion $R_s[n,m]$ zur Zeit n und der Verzögerung m errechnet werden

$$R_s[n,m] = E\{s^t[n]s[n + m]\} \quad (113)$$

Nach Einsetzen der Gleichung (108) in (113) und einige algebraische Umformungen, wird Gleichung (113) zu

$$R_s[n,m] = \sum_{l=-\infty}^{\infty} \Bigg( h_{\mathcal{U}}^t[n - lN] P h_{\mathcal{U}}[n + m - lN]$$

$$+ \sum_{r=0}^{R-1} h_{\mathcal{I}}^t[n - lN] C^t[r] P h_{\mathcal{U}}[n + m - (l-r)N]$$

$$+ \sum_{r=0}^{R-1} h_{\mathcal{U}}^t[n - lN] P C[r] h_{\mathcal{I}}[n + m - (l+r)N]$$

$$+ \sum_{r=0}^{R-1}\sum_{\rho=0}^{R-1} h_{\mathcal{I}}^t[n - lN] C^t[r] P C[\rho] h_{\mathcal{I}}[n + m - (l-r+\rho)N] \Bigg) + CC \,.$$

$$(114)$$

Um Gleichung (114) zu erhalten, wurde die Annahme von statistisch unabhängigen Daten mit der derselben Leistung im realen und imaginären Teil getroffen. P ist eine Diagonalmatrix, deren Elemente mit der Leistung der verwendeten Kanäle korrespondieren,

$$P = \mathrm{diag}\big\{ [\sigma_{A_{u_1}}^2 \ \sigma_{A_{u_2}}^2 \ \cdots \ \sigma_{A_{u_U}}^2] \big\} \quad \text{with} \quad \sigma_{A_{u_i}}^2 = \mathrm{E}\{|A_{u_i}|^2\}, \ \{u_1, u_2, \ldots, u_U\} = \mathcal{K_U} \,.$$

$$(115)$$

Aus (114) kann die periodische Natur von Rs[n,m] erkannt werden, jedes n + pN bringt dasselbe Resultat wie n. Um diese Periodizität zu eliminieren, wird Rs[n,m] über eine Periode gemittelt.

$$R_s[m] = \frac{1}{N} \sum_{n=0}^{N-1} R_s[n,m] \qquad\qquad (116)$$

$$= \frac{1}{N} \sum_{n=0}^{N-1} \Bigg( \sum_{l=-\infty}^{\infty} \Bigg( h_{\mathcal{U}}^t[n - lN] P h_{\mathcal{U}}[n + m - lN] \qquad (117)$$

$$+ \sum_{r=0}^{R-1} h_{\mathcal{I}}^t[n - lN] C^t[r] P h_{\mathcal{U}}[n + m - (l-r)N]$$

$$+ \sum_{r=0}^{R-1} h_{\mathcal{U}}^t[n - lN] P C[r] h_{\mathcal{I}}[n + m - (l+r)N]$$

$$+ \sum_{r=0}^{R-1}\sum_{\rho=0}^{R-1} h_{\mathcal{I}}^t[n - lN] C^t[r] P C[\rho] h_{\mathcal{I}}[n + m - (l-r+\rho)N] \Bigg) \Bigg) + CC$$

$$=\frac{1}{N}\sum_{n=0}^{N-1}\left(h_{\mathcal{U}}^{t}[n]Ph_{\mathcal{U}}[n+m]\right. \tag{118}$$

$$+\sum_{r=0}^{R-1}h_{\mathcal{I}}^{t}[n]C^{t}[r]Ph_{\mathcal{U}}[n+m+rN]+\sum_{r=0}^{R-1}h_{\mathcal{U}}^{t}[n]PC[r]h_{\mathcal{I}}[n+m-rN]$$

$$\left.+\sum_{r=0}^{R-1}\sum_{\rho=0}^{R-1}h_{\mathcal{I}}^{t}[n-lN]C^{t}[r]PC[\rho]h_{\mathcal{I}}[n+m+(r-\rho)N]\right)+CC$$

Weil $h_u[n]$ und $h_l[n]$ nur eine Stützung in dem Bereich $0 \leq n < N$ haben, reduziert sich die Summation über l in Gleichung (117) auf den Term für l =0, während alle anderen Terme gleich Null sind.

Anwenden der diskreten Fourier-Transformierten auf $R_s[m]$ ergibt das Leistungsdichtespektrum

$$S_{s}(e^{j\theta})=\sum_{m=-\infty}^{\infty}R_{s}[m]e^{-j\theta m} \tag{119}$$

$$=\frac{1}{N}\sum_{m=-RN+1}^{RN-1}\left(\sum_{n=0}^{N-1}\left(h_{\mathcal{U}}^{t}[n]Ph_{\mathcal{U}}[n+m]\right.\right.$$

$$+\sum_{r=0}^{R-1}h_{\mathcal{I}}^{t}[n]C^{t}[r]Ph_{\mathcal{U}}[n+m+rN]+\sum_{r=0}^{R-1}h_{\mathcal{U}}^{t}[n]PC[r]h_{\mathcal{I}}[n+m-rN]$$

$$\left.\left.+\sum_{r=0}^{R-1}\sum_{\rho=0}^{R-1}h_{\mathcal{I}}^{t}[n-lN]C^{t}[r]PC[\rho]h_{\mathcal{I}}[n+m+(r-\rho)N]\right)+CC\right)e^{-j\theta m}$$

$$\tag{120}$$

Weil $R_s[m]$ ungleich Null nur in dem Bereich -RN < m < RN ist, muß die Summation in Gleichung (120) nur in einem endlichen Intervall durchgeführt werden.

Da wir nun einen Ausdruck für das Leistungsdichtespektrum $S_s(e^{j\theta})$ haben, kann nun ein Kriterium formuliert werden, welches unter Bezug auf die Koeffizienten $C[r]$ , r = 0,1,...R-1 optimiert werden soll. Die Aufgabe der Erfindung ist es, das übertragene Signal innerhalb des Ausblendbereichs zu unterdrücken. Das erfindungsgemäß angewandte Kriterium zur Optimierung ist das gewichtete Integral von $S_s(e^{j\theta})$.

$$\psi_{1}(C[0],C[1],\ldots,C[R-1])=\int_{0}^{2\pi}W(e^{j\theta})S_{s}(e^{j\theta})\,d\theta \tag{121}$$

$W(e^{j\theta})$ ist die Gewichtsfunktion. Wenn $W(e^{j\theta})$ innerhalb des Ausblendbereiches auf 1 und außerhalb 0 gesetzt wird, ist die Gleichung (121) die übertragene Leistung innerhalb der Ausblendbereiche. Diese Wahl korrrespondiert mit der minimalen übertragenen Leistung im Ausblendbereich. Die minimale übertragene Leistung ist jedoch nicht genau der interessierende Wert. Das genaue Ziel besteht darin, den maximalen Wert des Leistungsdichtespektrums $S_s(e^{j\theta})$ innerhalb des Ausblendbereiches unter einen bestimmten Wert zu unterdrücken. Natürlich kann dafür ein Min/ Max-Kriterium formuliert werden, dieses ist aber mathematisch schwieriger zu handhaben.

Deshalb wird nicht eine rechteckige Fensterfunktion $W(e^{j\theta})$ sondern eine relativ sanft verlaufende Gewichtungsfunktion verwendet. Die Übergänge von 1 auf Null und umgekehrt werden dabei mit linearen Steigungen ausgeführt. Diese Wahl entspricht weder der Min/Max-Lösung noch der Minimierung der übertragenen Leistung innerhalb des Ausblendbereiches, aber Simulationen haben gezeigt, daß diese Wahl bessere Ergebnisse als die Minimierung der übertragenden Leistung innerhalb bestimmter Frequenzbänder liefert.

Die Koeffizienten **C**[r], r = 0,1,..., R-1 können nun als Lösung des Optimierungsproblems angeschrieben werden

$$
\begin{pmatrix} C[0] \\ C[1] \\ \vdots \\ C[R-1] \end{pmatrix} = \arg \min_{\substack{C[0] \\ C[1] \\ \vdots \\ C[R-1]}} \psi_1(C[0], C[1], \ldots, C[R-1]) .
$$

$$(122)$$

weil (121) eine quadratische Funktion in den Koeffizienten C[r] ist, hat Gleichung (121) ein einziges Minimum. Dieses Minimum wird beschreiben durch die Gleichungen

$$
\frac{\partial}{\partial [C[r]]_{ui}} \psi_1(C[0], C[1], \ldots, C[R-1]) = 0 \qquad \text{for} \qquad \begin{array}{l} r = 0, 1, \ldots, R-1 \\ u = u_1, u_2, \ldots, u_U \\ r = i_1, i_2, \ldots, i_I \end{array}
$$

$$(123)$$

die durch U unabhängige lineare Gleichungssysteme gelöst werden können. Jeder Wert von u entspricht einem linearen Gleichungssystem mit RI Unbekannten. Das Gleichungssystem, das einem festen Wert von $u_X \in$ U gehört, beschreibt die Koeffizienten, die in der x-ten Zeile von allen R Matrizen **C**[r], r = 0,1, 2..., R-1 enthalten sind. Wird die x-te Zeile der Matrix **C**[r] als $\mathbf{c}^T_{ux}$[r] bezeichnet (Vergleiche mit Gleichung (112)), kann der Vektor der Unbekannten angeschrieben werden als $\mathbf{c}^T_{ux}$ = [$\mathbf{c}^T_{ux}$[0]$\mathbf{c}^T_{ux}$[1]...$\mathbf{c}^T_{ux}$[R-1]]. Auf den ersten Blick erscheint es seltsam, daß das durch Gleichung (123) beschriebene Gleichungssystem in U unabhängige Gleichungssysteme aufspaltet. Die in der x-ten Zeile enthaltenen Koeffizienten sind die Gewichtsfaktoren, die auf die I Kompensationstöne $i_1$, $i_2$, ...$i_I$ angewandt werden müssen, um den Effekt des Tons $u_X$ zu minimieren. Die statistisch unabhängigen Daten, die im Zusammenhang mit der Ableitung von $S_s(e^{j\theta})$ angenommen wurden, implizieren, daß die durch einen Ton übertragenen Daten keine Information der von den anderen Tönen übertragenen Daten beinhalten. Die Minimierung des Effekts der durch einen einzigen Ton übertragenen Daten wird daher nur durch Betrachtung dieses einzelnen Tons und keines anderen durchgeführt, sodaß die durch Gleichung (123) beschriebenen Gleichungen in so viele Systeme wie zur Informationsübertragung verwendete Töne aufspaltet.

Die Koeffizienten-Matrix von allen U Gleichungssystemen sind dieselben und können als eine Block-Matrix dargestellt werden

$$
A = \begin{pmatrix} A_{00} & A_{01} & \cdots & A_{0R-1} \\ A_{10} & A_{11} & \cdots & A_{1R-1} \\ \vdots & \vdots & \ddots & \vdots \\ A_{R-10} & A_{R-11} & \cdots & A_{R-1R-1} \end{pmatrix} \qquad (124)
$$

mit der Matrix $A_{k1}$, k,1 = 0, 1,..., R-1, definiert als

$$A_{kl} = \int_0^{2\pi} W(e^{j\theta}) H_{\mathcal{I}}(e^{j\theta}) H_{\mathcal{I}}^t(e^{j\theta}) e^{-j\theta(l-k)N} \, d\theta \, .$$

$$(125)$$

Die neu eingeführte Größe $H_I(e^{j\theta})$ enthält die Fourier-Transformierte $H_i(e^{j\theta})$ der Kompensationstöne $h_i[n]$, $i \in K_I$.

$$H_{\mathcal{I}}^T(e^{j\theta}) = \begin{bmatrix} H_{i_1}(e^{j\theta}) & H_{i_2}(e^{j\theta}) & \dots & H_{i_I}(e^{j\theta}) \end{bmatrix} \qquad \{i_1, i_2, \dots, i_I\} = \mathcal{K}_{\mathcal{I}}$$

$$(126)$$

Die rechte Seite des Gleichungssystems, welche u = $u_X$ entspricht, kann als ein Block-Vektor angeschrieben werden,

$$d_{u_x}^T = \begin{bmatrix} d_{u_x}^T[0] & d_{u_x}^T[1] & \dots & d_{u_x}^T[R-1] \end{bmatrix} \qquad \text{with}$$

$$d_{u_x}[r] = -\int_0^{2\pi} W(e^{j\theta}) H_{u_x}(e^{j\theta}) H_{\mathcal{I}}^{\star}(e^{j\theta}) e^{j\theta r N} \, d\theta \quad \text{for} \quad r = 0, 1, \dots, R-1 \, .$$

$$(127)$$

$H_{ux}(e^{j\theta})$ ist die Fourier-Transformierte der Basis-Funktion $h_{ux}[n]$ des Tons $u_x$. Mit Gleichungen (124) und (127) wird nun für jedes $u_X \in U$ ein Gleichungssystem erhalten

$$Ac_{u_x} = d_{u_x},$$

$$(128)$$

das für **$c_{ux}$** gelöst werden kann. Alle möglichen Werte für $u_X$ ergeben den kompletten Satz von Koeffizienten **C** [r] (Vergleiche mit Gleichung (112)), die für das erfindungsgemäßen Verfahren benötigt werden.

Eine weitere Möglichkeit der Berechnung ist die deterministische Berechnung. Es wird nicht wie bei der vorhergehenden Berechnungsmethode Statistik angewandt, um die optimale Wahl der Koeffizienten **C**[r], r = 0, 1,..., R-1 zu berechnen. Weil die aktuellen Daten und alle vorhergehenden Daten bekannt sind, ist es möglich, die Fourier-Transformierte der übertragenen Folge zu berechnen. Das minimierte Kriterium ist die im Ausblendbereich enthaltene Energie der Fourier-Transformierten.

Es wird zumindest ein Teil der in zumindest einem Ausblendbereich beinhalteten Subträger bzw. an diesen Ausblendbereich angrenzende Subträger als Kompensationstöne verwendet werden, deren Beladung so berechnet wird, daß das Integral über den gesamten Frequenzbereich des gewichteten, quadrierten Betrags der Fourier-Transformierten des gesendeten Datensignals über eine vorbestimmbare Anzahl von Datenblöcken minimiert wird.

Das für diese Ausführungsform des erfindungsgemäßen Verfahrens angewandte System ist dem im Blockdiagramm gemäß Fig.33 sehr ähnlich, Der einzige Unterschied besteht in der Berechnungs-Einheit für den Kompensations-Vektor. Im Gegensatz zur vorhergehenden statistischen Berechnung wird nicht auf eine lineare Transformation der aktuellen und der vergangenen Daten eingeschränkt.

Das übertragende Signal kann geschrieben werden als

$$s[n] = \sum_{l=-\infty}^{\infty} \left( A^T[l] h_U[n - lN] + c^T[l] h_{\mathcal{I}}[n - lN] \right) + \text{CC} \, .$$

$$(129)$$

Der Vektor c[1] enthält die Amplituden der Kompensationstöne. Im Idealfall wird die Fourier-Transformierte der vollständigen Sequenz bis zur Gegenwart berechnet und versucht, die Koeffizienten zu finden, die dem kleinsten Anteil der Energie innerhalb des Ausblendbereiches entsprechen. Dabei ergeben sich die folgenden zwei Probleme. Erstens werden zur Berechnung der Fourier-Transformierten die vollständige Folge aller vergangenen Daten benötigt, was einen unendlich großen Speicher erfordert. Zweitens, wenn die Abfolge in der unendlichen Vergangenheit beginnt, kann die Folge nicht absolut summierbar sein und daher die Fourier-Transformierte nicht existieren.

Um diese Probleme zu lösen, wird nicht eine vollständige Folge betrachtet sondern nur die durch den aktuellen und die letzten R-1 Datenvektoren hervorgerufenen Folgen. Der erforderliche Speicher wird dadurch R-1 und aufgrund der endlichen Folge existiert auch die Fourier-Transformierte. Der betrachtete Zeitbereich kann geschrieben werden als

$$s[n] = \sum_{l=m-R+1}^{m} \left( A^T[l]h_{\mathcal{U}}[n - lN] + c^T[l]h_{\mathcal{I}}[n - lN] \right) + \text{CC} .$$

(130)

Die Zahl m ist der Zeitindex des aktuellen Datenvektors und m = ⌊ n/N⌋. **A**[l] und c[l] mit 1=/m entspricht den vergangenen Datenvektoren und den Kompensationsvektoren. A[m] ist der aktuelle Datenvektor, c[m] ist der aktuelle Kompensationsvektor, der berechnet werden muß.

Die Fourier-Transformierte der Gleichung (129) ist gleich

$$S(e^{j\theta}) = \sum_{l=m-R+1}^{m} \left( A^T[l]H_{\mathcal{U}}(e^{j\theta}) + c^T[l]H_{\mathcal{I}}(e^{j\theta}) \right.$$
$$\left. + A^t[l]H_{\mathcal{U}}^*(e^{-j\theta}) + c^t[l]H_{\mathcal{I}}^*(e^{-j\theta}) \right) e^{-j\theta lN} .$$

(131)

Der neu eingesetzte Wert Hu(e^{jθ}) enthält die Fourier-Transformierten Hu(e^{jθ}) der informationsübertragenden Töne $h_u[n]$, u ∈K_u.

$$H_{\mathcal{U}}^T(e^{j\theta}) = \left[ H_{u_1}(e^{j\theta}) \; H_{u_2}(e^{j\theta}) \; \ldots \; H_{u_U}(e^{j\theta}) \right] \qquad \{u_1, u_2, \ldots, u_U\} = \mathcal{K}_{\mathcal{U}} .$$ (132)

Die Funktion,die durch die optimale Wahl der **c**[m] optimiert werden soll, ist nun das Integral der quadrierten Größe /S(e^{jθ})/² gewichtet durch W(e^{jθ}).

$$\dot\psi_2(c[m]) = \int_0^{2\pi} W(e^{j\theta})|S(e^{j\theta})|^2 \, d\theta$$

(133)

Wenn die Gewichtungsfunktion W(e^{jθ}) als eine Rechtecks-Fenster-Funktion gewählt wird, die innerhalb des Ausblendbereiches 1 und Null überall außerhalb dieses Bereiches ist, entspricht das Integral in Gleichung (133) der Energie im Inneren des Ausblendbereiches.

Wie bereits im Zusammenhang mit der statistischen Berechnung bereits erklärt worden ist, muß diese Wahl nicht optimal sein. Wieder ist Gleichung (133) eine quadratische Funktion vom Koeffizienten-Vektor **c**[m] mit einem einzigen Minimum mit Bezug auf **c**[m]. Das Minimum wird durch Setzen der Ableitung von Gleichung (133) gleich Null und durch Lösen für **c**[m] erreicht. Dadurch kann der Kompensationsvektor **c**[m] ausgedrückt werden als

$$c[m] = \sum_{l=m-R+1}^{m} \Big( F[m-l]A[l] + G[m-l]A^{\star}[l] \Big)$$
$$+ \sum_{l=m-R+1}^{m-1} \Big( Q[m-l]c[l] + R[m-l]c^{\star}[l] \Big) . \qquad (134)$$

Die Matrizen F(1), G(1), Q(1), R(1), A(1), B(1), C(1), D(1), , 1= 0,1,,..., R-1 sind definiert als

$$F[l] = \big( B^{-1}[0]D[0] - D^{\star^{-1}}[0]B^{\star}[0] \big)^{-1} \big( -B^{-1}[0]C[l] + D^{\star^{-1}}[0]A^{\star}[l] \big) \qquad (135)$$

$$G[l] = \big( B^{-1}[0]D[0] - D^{\star^{-1}}[0]B^{\star}[0] \big)^{-1} \big( -B^{-1}[0]A[l] + D^{\star^{-1}}[0]C^{\star}[l] \big) , \qquad (136)$$

$$Q[l] = \big( B^{-1}[0]D[0] - D^{\star^{-1}}[0]B^{\star}[0] \big)^{-1} \big( -B^{-1}[0]D[l] + D^{\star^{-1}}[0]B^{\star}[l] \big) \qquad (137)$$

$$R[l] = \big( B^{-1}[0]D[0] - D^{\star^{-1}}[0]B^{\star}[0] \big)^{-1} \big( -B^{-1}[0]B[l] + D^{\star^{-1}}[0]D^{\star}[l] \big) . \qquad (138)$$

$$A[l] = \int_0^{2\pi} W(e^{j\theta})H_{\mathcal{I}}^{\star}(e^{-j\theta})H_{\mathcal{U}}^{t}(e^{j\theta})e^{-j\theta lN}\, d\theta \qquad (139)$$

$$B[l] = \int_0^{2\pi} W(e^{j\theta})H_{\mathcal{I}}^{\star}(e^{-j\theta})H_{\mathcal{I}}^{t}(e^{j\theta})e^{-j\theta lN}\, d\theta \qquad (140)$$

$$C[l] = \int_0^{2\pi} W(e^{j\theta})H_{\mathcal{I}}^{\star}(e^{-j\theta})H_{\mathcal{U}}^{T}(e^{-j\theta})e^{-j\theta lN}\, d\theta \qquad (141)$$

$$D[l] = \int_0^{2\pi} W(e^{j\theta})H_{\mathcal{I}}^{\star}(e^{-j\theta})H_{\mathcal{I}}^{T}(e^{-j\theta})e^{-j\theta lN}\, d\theta . \qquad (142)$$

Die Matrizen F(1), G(1), Q(1), R(1), , 1 = 0,1,..., R-1 ändern sich nicht mit der Zeit. Sie können einmal berechnet und gespeichert werden. Die einzigen Rechenoperationen, die für jeden Zeitschritt durchgeführt werden müssen, ist die Auswertung von Gleichung (134). Verglichen mit der statistischen Berechnung erfordert die deterministische Berechnung einen höheren rechnerischen Aufwand , weil die Matrix-Multiplikationen 2R(I x U) und 2R - 2 (IxI) durchgeführt werden müssen, verglichen mit den Matrixmultiplikationen R(I x U) bei der statistischen Berechnung. Die zusätzliche Komplexheit ergibt sich aufgrund der Tatsache, daß c[m] auch von den komplex konjugierten Werten der Daten abhängt.

Wie nachfolgend noch erläutert werden wird, ergibt die statistische und die deterministische Berechnungsmethode beinahe die gleichen Resultate, sodaß die statistische Berechnung aufgrund es geringeren Rechenaufwandes vorzuziehen ist.

Werden die Datenblöcke mit einem zyklischen Prefix übertragen, werden die letzten P Werte jedes Zeitbereichsblocks diesem Block vorangestellt. Das zyklische Prefix kann durch Verwendung von leicht modifizierten Basisfunktionen für die informationsübertragenden Töne und die Kompensationstöne beschrieben werden.

$$h_u[n] = e \begin{cases} j\frac{2\pi}{M}u(n-P) \\ 0 \end{cases} \qquad u \in \mathcal{K_U},\ \text{n=0,1,} \dots \text{,N+P} \qquad (143)$$

$$h_i[n] = \begin{cases} e^{j\frac{2\pi}{M}i(n-P)} \\ 0 \end{cases} \qquad i \in \mathcal{K_I},\ \text{n=0,1,} \dots \text{,N+P} \qquad (144)$$

Die Vektoren $\mathbf{h}_u[n]$ und $\mathbf{h}_l[n]$ sind noch immer zusammengesetzt wie in Gleichung (110) und (107) beschrieben, aber mit den neuen vorstehenden Werten von $h_u[n]$ und $h_i[n]$.

In den vollständigen Ableitungen der statistischen und der deterministischen Berchnungsmethode werden die besondere Form der Basisfunktionen(110) und (107) nicht in den Berechnungen berücksichtigt. Wenn die Basisfunktionen durch Gleichung (144) und (143) ersetzt werden, sind die anderen Gleichungen weiterhin gültig.

Abschließend wird nunmehr eine Simulation der statistischen Methode angegeben, wenn diese auf ein System mit einem zyklischen Prefix angewandt wird.

Dazu wird ein VDSL-Übertragungssystem herangezogen. Ein Hauptproblem bei VDSL-Übertragungen ist die Existenz von sehr schmalen Bändern, sogenannten HAM-Bändern, die durch den Amateurfunk besetzt sind. Die HAM-Bänder sindin den Bereichen von 1,81 - 2,00 MHz, 3,50 - 3,80 MHz und 7,00 - 7,10 MHz angeordnet. Innerhalb dieser Bänder muß das übertragene Leistungsdichtespektrum um 20 dB reduziert werden. Um das Leistungsdichtespektrum innerhalb dieser Bänder zu reduzieren, ist es nicht ausreichend, keine Information in den die HAM-Bänder überlappenden Subkanälen zu übertragen. Eine Reihe von benachbarten Kanälen müssen mit Nullen geladen werden, um die erwünschte Reduktion des Leistungsdichtespektrums zu erreichen. In den nachfolgenden Beispielen wird die Anwendbarkeit des erfindungsgemäßen Verfahrens gezeigt, um die Anzahl der nullgeladenen Subkanäle zu reduzieren.

Alle System verwenden eine Kanalnummer von M=512. Die Länge der Guard-Intervalle oder des zyklischen Prefixes ist 32.

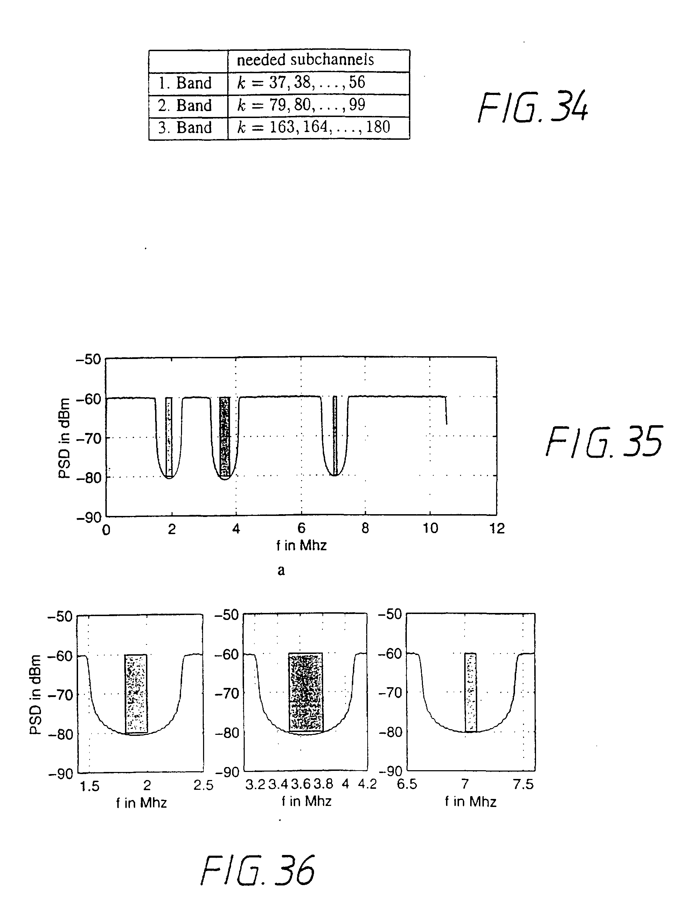

Die erste Simulation betrifft ein System , das keine speziellen Methoden zur Unterdrückung des Leistungsdichtespektrums innerhalb der HAM-Bänder verwendet. Die erforderliche Unterdrückung wird durch einige mit Null geladenen Töne erreicht. Ein zyklischer Prefix wird angewandt. Das Leistungsdichtespektrum und die erforderlichen nullgeladenen Töne des Systems A sind in Fig.35 und 36 und in der Tabelle gemäß Fig.34 angegeben.

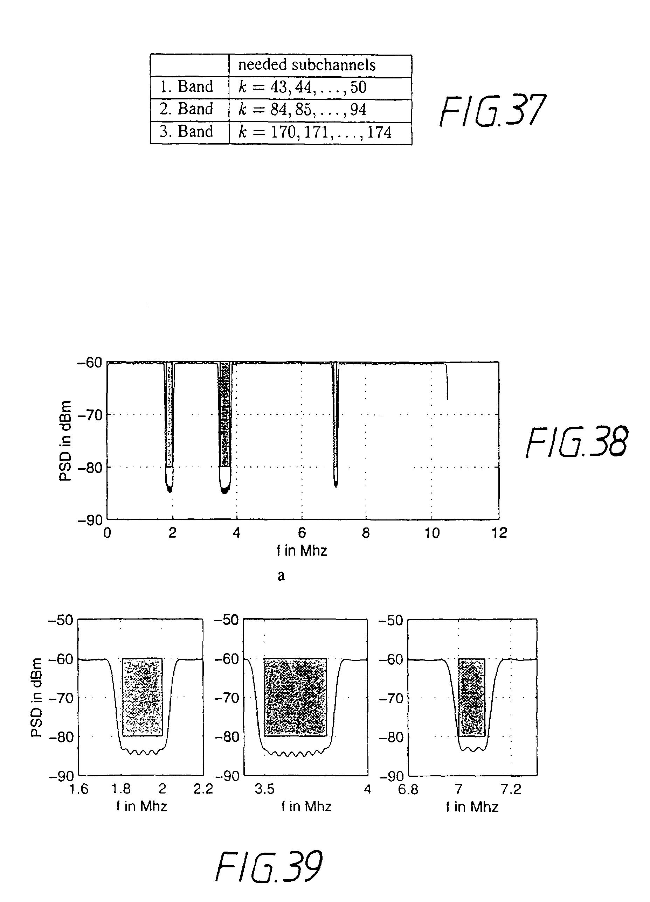

In der zweiten Simulation wird die erforderliche Unterdrückung des Leistungsdichtespektrums innerhalb des HAM-Bands durch das erfindungsgemäße statistische Verfahren erreicht. System B verwendet ein Guard-Intervall. Das Leistungsdichtespektrum und die nullgeladenen Töne sind durch Fig.38 und 39 und die Tabelle gemäß Fig.37 angegeben.

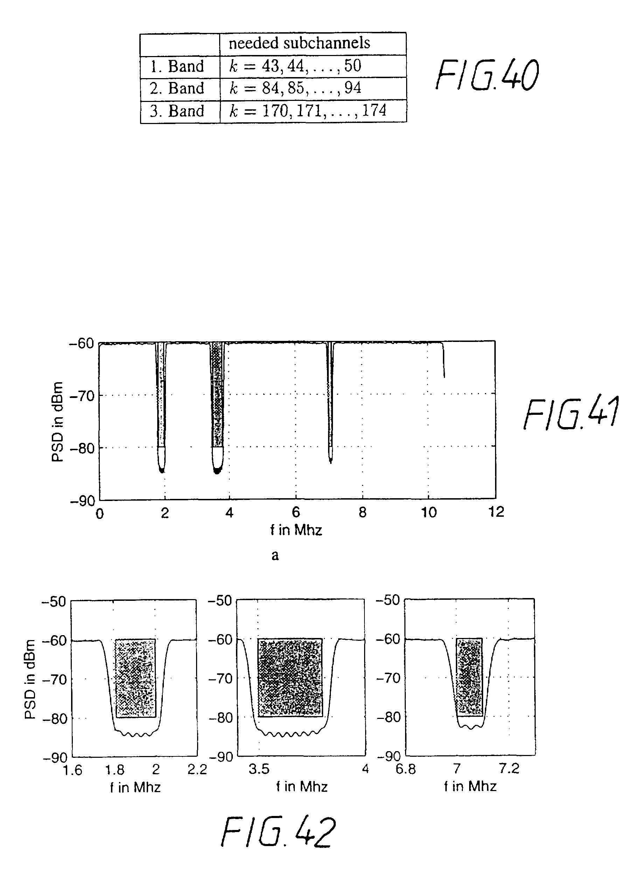

System C entspricht einem System, welches das deterministische, erfindungsgemäße Verfahren anwendet. Fig.41, 42 und Tabelle gemäß Fig. 40. zeigen das Leistungsdichtespektrum und die nullgeladenen Töne.

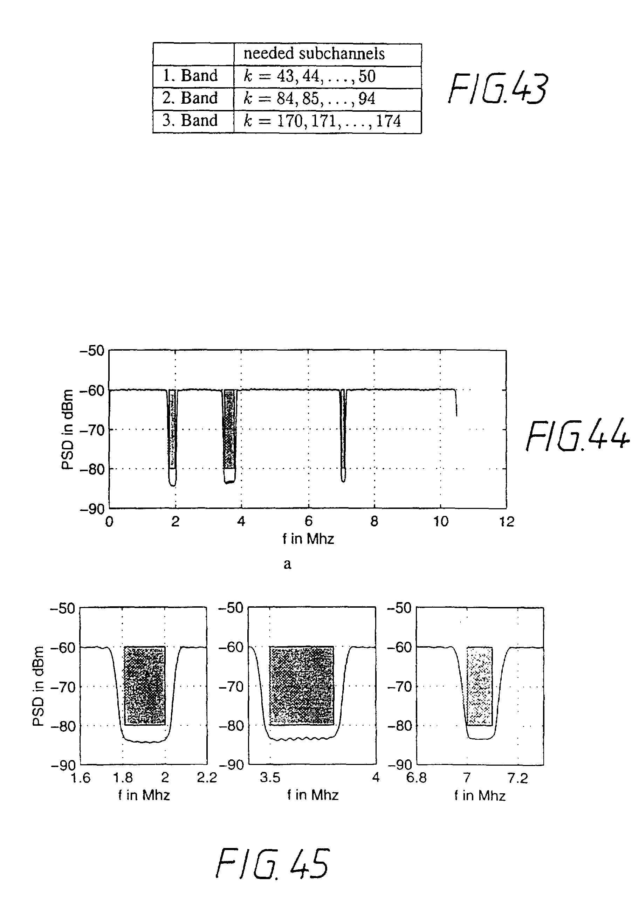

Das System D wendet das statistische, erfindungsgemäße Verfahren für den Fall an, daß ein zyklischer Prefix verwendet wird. Die Simulationsergebnisse sind in der Tabelle nach Fig.43 zusammengefaßt, das Leistungsdichtespektrum ist in Fig.44, 45 gezeigt.

Bei Vergleich der Tabellen nach Fig.34, 37, 40 und 43 ist ersichtlich, daß die das erfindungsgemäße Verfahren anwendenden Systeme dieselbe Anzahl an nullgeladenen Tönen erfordern, um die gewünschte Unterdrückung des Leistungsdichtespektrums innerhalb der HAM-Bänder zu erreichen. System A, das kein erfindungsgemäßes Verfahren anwendet, benötigt 35 Kanäle mehr, um dasselbe Ziel zu erreichen wie die Systeme B und C. Bei Vergleich der Leistungsdichtespektren der Systeme B und C ergibt sich, daß diese fast völlig gleichwertig sind. Wie vorher bereits erwähnt, ist das System B weniger komplex als das System C sodaß das statistische System bevorzugt angewendet werden wird. System D, das ein zyklisches Prefix anstelle eines Guardintervalls anwendet, verhält sich genauso gut wie System B.

Das erfindungsgemäße Verfahren ist auch für ein System mit einem zyklischen Prefix anwendbar. Bei Vergleich der Unterdrückung des Leistungsdichtespektrums der Systeme A und D, die beide für den zyklischen Prefix angewandt werden, ist zu ersehen, daß System A die Anforderungen sehr schlecht erbringt, während System D sich sehr gut verhält.

**Patentansprüche**

1. Verfahren zur Unterdrückung von schmalen Frequenzbändern in Ausblendbereichen bei der Übertragung von Daten durch ein Mehrträgerverfahren, z.B. Discrete Multitone DMT, bei dem ein vorbestimmtes breites Frequenzband in eine Vielzahl von Subkanälen mit diesen zugeordneten Subträgern unterteilt ist und die zu übertragenden Daten im Sender in Blöcke unterteilt, durch Inverse-Diskrete-Fourier-Transformation IDFT moduliert und im Empfänger durch Diskrete-Fourier-Transformation DFT demoduliert werden, wodurch jeder Subkanal im Spektrum eine Hauptkeule und mehrere, im Bereich naher Subträger auftretende Nebenkeulen aufweist, wobei zumindest ein Teil der in zumindest einem Ausblendbereich beinhalteten Subträger bzw. an diesen Ausblendbereich angrenzenden Subträger als Kompensationstöne verwendet werden, die ein ähnliches Frequenzspektrum wie die in dem Ausblendbereich auftretenden Nebenkeulen von außerhalb des Ausblendbereiches vorhandenen Subträgern aufweisen und entsprechend den Datenwerten dieser Nebenkeulen ausgesteuert werden, um diese zu unterdrücken, **dadurch gekennzeichnet, daß** die Aussteuerung der Kompensationstöne so berechnet wird, daß das Integral des gewichteten, gesendeten Leistungsdichte-Spektrums über den gesamten Frequenzbereich minimiert wird.

2. Verfahren zur Unterdrückung von schmalen Frequenzbändern in Ausblendbereichen bei der Übertragung von Daten durch ein Mehrträgerverfahren, z.B. Discrete Multitone DMT, bei dem ein vorbestimmtes breites Frequenzband in eine Vielzahl von Subkanälen mit diesen zugeordneten Subträgern unterteilt ist und die zu übertragenden Daten im Sender in Blöcke unterteilt, durch Inverse-Diskrete-Fourier-Transformation IDFT moduliert und im Empfänger durch Diskrete-Fourier-Transformation DFT demoduliert werden, wodurch jeder Subkanal im Spektrum eine Hauptkeule und mehrere, im Bereich naher Subträger auftretende Nebenkeulen aufweist, wobei zumindest ein Teil der in zumindest einem Ausblendbereich beinhalteten Subträger bzw. an diesen Ausblendbereich angrenzenden Subträger als Kompensationstöne verwendet werden, die ein ähnliches Frequenzspektrum wie die in dem Ausblendbereich auftretenden Nebenkeulen von außerhalb des Ausblendbereiches vorhandenen Subträgern aufweisen und entsprechend den Datenwerten dieser Nebenkeulen ausgesteuert werden, um diese zu unterdrücken, **dadurch gekennzeichnet, daß** die Aussteuerung der Kompensationstöne so berechnet wird, daß das Integral über den gesamten Frequenzbereich des gewichteten, quadrierten Betrags der Fourier-Transformierten des gesendeten Datensignals über eine vorbestimmbare Anzahl von Datenblöcken minimiert wird.

3. Verfahren nach Anspruch 1 oder 2, **dadurch gekennzeichnet, daß** bereits gesendete Daten bei der Berechnung berücksichtigt werden.

4. Verfahren nach einem der Ansprüche 1, 2 oder 3, **dadurch gekennzeichnet, daß** zwischen den zu Blöcken zusammengefaßten Daten entweder ein Guard-Intervall oder ein zyklisches Prefix übertragen wird.

**Claims**

1. Method for the suppression of small frequency bands in fading areas at the transmission of data by means of a multi-carrier method, e.g. Discrete Multitone DMT, in which a predetermined broad frequency band is divided into a multitude of subchannels with sub-carriers assigned to them and the data to be transmitted divided within the transmitter in blocks, modulated by Inverse Discrete Fourier Transformation, IDFT, and demodulated in the receiver by Discrete Fourier Transformation, DFT, which causes each subchannel in the spectrum to form a main lobe and several minor lobes, occurring in the area of near sub-carriers, with at least part of the sub-carriers included in at least one fading area and/or sub-carrier bordering on this fading area can be used as compensating tones showing a similar frequency spectrum as the minor lobes occurring in the fading area of sub-carriers existing outside the fading area sector and modulated in accordance with the data values of these minor lobes, in order to suppress them, **marked by the fact** that the modulation of the compensation tones is calculated in a way to make sure that the integral of the weighted transmitted power density spectrum is minimised over the entire frequency range.

2. Method for the suppression of small frequency bands in fading areas at the transmission of data by means of a multi-carrier method, e.g. Discrete Multitone DMT, in which a predetermined broad frequency band is divided into a multitude of sub-channels with sub-carriers assigned to them and the data to be transmitted divided within the transmitter in blocks, modulated by Inverse Discrete Fourier Transformation, IDFT, and demodulated in the receiver by Discrete Fourier Transformation, DFT, which causes each sub-channel in the spectrum to form a main lobe and several minor lobes in the area of near sub-carriers, with at least one part of the sub-carriers included in at least one fading area and/or sub-carrier bordering on this fading area can be used as compensating tones showing a similar frequency spectrum as the minor lobes occurring in the fading area of sub-carriers existing outside the fading area and modulated in accordance with the data values of these minor lobes, in order to suppress them, **marked by the fact** that the modulation of the compensation tones is calculated in a way to make sure that the integral is minimised over the entire frequency range of the weighted, squared value of the Fourier transformation of the transmitted data signal over a predefined number of data blocks.

3. Method in accordance with claim 1 or 2 **marked by the fact** that data already transmitted has been taken into consideration in the calculation.

4. Method in accordance with one of the claims 1, 2 or 3, **marked by the fact** that between data combined into blocks either a guard interval or a cyclic prefix is transmitted.

**Revendications**

1. Procédé pour annuler des bandes de fréquence étroite dans des zones de suppression pendant la transmission de données selon un procédé à porteuses multiples, par exemple en modulation DMT (multitonalité discrète), dans lequel une large bande de fréquence prédéterminée est subdivisée en une pluralité de sous-canaux avec des sous-porteuses associées à ceux-ci et les données à transmettre sont partagées en blocs au niveau de l'émetteur, modulées par transformation de Fourier discrète inverse (TFDI) et démodulées par transformation de Fourier discrète (TFD) au niveau du récepteur, de sorte que chaque canal présente un lobe principal dans le spectre et plusieurs lobes auxiliaires au niveau de sous-porteuses proches, une partie au moins des sous-porteuses contenues dans au moins une zone de suppression ou des sous-porteuses contiguës de cette zone de' suppression étant utilisées comme tonalités de compensation présentant un spectre de fréquence analogue à celui des lobes auxiliaires de sous-porteuses extérieures à la zone de suppression présents dans la zone de suppression, et étant modulées selon les valeurs de données de ces lobes auxiliaires pour annuler ceux-ci, **caractérisé en ce que** la modulation des tonalités de compensation est calculée de telle sorte que l'intégrale du spectre de densité de puissance pondérée émise soit réduite au minimum sur toute la plage de fréquences.

2. Procédé pour annuler des bandes de fréquence étroite dans des zones de suppression pendant la transmission de données selon un procédé à porteuses multiples, par exemple en modulation DMT (multitonalité discrète), dans lequel une large bande de fréquence prédéterminée est subdivisée en une pluralité de sous-canaux avec des sous-porteuses associées à ceux-ci et les données à transmettre sont partagées en blocs au niveau de l'émetteur, modulées par transformation de Fourier discrète inverse (TFDI) et démodulées par transformation de Fourier discrète (TFD) au niveau du récepteur, de sorte que chaque canal présente un lobe principal dans le spectre et plusieurs lobes auxiliaires au niveau de sous-porteuses proches, une partie au moins des sous-porteuses contenues dans au moins une zone de suppression ou des sous-porteuses contiguës de cette zone de suppression étant utilisées comme tonalités de compensation présentant un spectre de fréquence analogue à celui des lobes auxiliaires de sous-porteuses extérieures à la zone de suppression présents dans la zone de suppression, et étant modulées selon les valeurs de données de ces lobes auxiliaires pour annuler ceux-ci, **caractérisé en ce que** la modulation des tonalités de compensation est calculée de telle sorte que l'intégrale sur toute la plage de fréquences de la somme au carré pondérée des valeurs après transformation de Fourier du signal de données émis soit réduite au minimum sur un nombre de blocs de données pouvant être prédéterminé..

3. Procédé selon la revendication 1 ou 2, **caractérisé en ce que** les données déjà émises sont prises en compte dans le calcul.

4. Procédé selon l'une quelconque des revendications 1, 2 ou 3, **caractérisé en ce qu'**un intervalle de garde ou un préfixe cyclique est transmis entre les données réunies en blocs.

FIG.1

FIG.2

FIG.3

FIG.4

FIG.5

Prototypfilter $H_0(e^{j\theta})$ für $M = 16$.

FIG.6

FIG.7

FIG.8

FIG.9

FIG.10

FIG.11

FIG.12

FIG.13

FIG.14

FIG.15

FIG.16

FIG.17

FIG.18

FIG.19

FIG. 20

FIG. 21

a

FIG. 22

FIG. 23

FIG. 24

FIG.25

a

FIG.26

FIG.27

FIG.28

FIG.29 a

FIG.30

FIG. 31

FIG. 32

FIG.33

|  | needed subchannels |
|---|---|
| 1. Band | $k = 37, 38, \ldots, 56$ |
| 2. Band | $k = 79, 80, \ldots, 99$ |
| 3. Band | $k = 163, 164, \ldots, 180$ |

*FIG. 34*

*FIG. 35*

a

*FIG. 36*

| | needed subchannels |
|---|---|
| 1. Band | $k = 43, 44, \ldots, 50$ |
| 2. Band | $k = 84, 85, \ldots, 94$ |
| 3. Band | $k = 170, 171, \ldots, 174$ |

*FIG.37*

*FIG.38*

a

*FIG.39*

| | needed subchannels |
|---|---|
| 1. Band | $k = 43, 44, \ldots, 50$ |
| 2. Band | $k = 84, 85, \ldots, 94$ |
| 3. Band | $k = 170, 171, \ldots, 174$ |

FIG.40

FIG.41

a

FIG.42

|  | needed subchannels |
|---|---|
| 1. Band | $k = 43, 44, \ldots, 50$ |
| 2. Band | $k = 84, 85, \ldots, 94$ |
| 3. Band | $k = 170, 171, \ldots, 174$ |

FIG.43

FIG.44

a

FIG. 45